(19) Europäisches Patentamt
European Patent Office
Office européen des brevets

(11) **EP 4 692 997 A1**

(12) **EUROPEAN PATENT APPLICATION**
published in accordance with Art. 153(4) EPC

(43) Date of publication:
**11.02.2026 Bulletin 2026/07**

(21) Application number: **24844404.4**

(22) Date of filing: **06.06.2024**

(51) International Patent Classification (IPC):
**G06F 3/0346** (2013.01)   **H04N 21/422** (2011.01)
**G06F 3/01** (2006.01)

(52) Cooperative Patent Classification (CPC):
**G06F 3/01; G06F 3/0346; G06F 3/0481;
G06F 3/0484; G06F 3/0487; H04N 21/422**

(86) International application number:
**PCT/CN2024/097873**

(87) International publication number:
**WO 2025/020709 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **21.07.2023  CN 202310909379**

(71) Applicant: **Huawei Technologies Co., Ltd.
Shenzhen, Guangdong 518129 (CN)**

(72) Inventor: **WU, Siju
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **CURSOR POSITION DETERMINATION METHOD AND REMOTE CONTROL DEVICE**

(57)   A cursor position determining method and a remote control device are disclosed. The method includes: The remote control device determines a first deflection angle of a pointing direction of the remote control device relative to a first reference line when the pointing direction of the remote control device is deflected; the remote control device determines a first offset distance based on the first deflection angle and a first virtual arc surface, where a central position of the first virtual arc surface is on the first reference line, and a tangent at the central position of the first virtual arc surface is perpendicular to the first reference line; and the remote control device determines, based on a central position of a screen device and the first offset distance, a cursor position that is of a cursor corresponding to the remote control device and that is on the screen device. In this method, when a distance between the remote control device and the screen device varies or the pointing direction of the remote control device varies, if the remote control device is deflected by a same angle, a distance by which the cursor moves on the screen device is still the same, so that a user can accurately control movement accuracy of the cursor.

FIG. 5

EP 4 692 997 A1

**Description**

CROSS-REFERENCE TO RELATED APPLICATIONS

This application claims priority to Chinese Patent Application No. 202310909379.7, filed with the China National Intellectual Property Administration on July 21, 2023 and entitled "CURSOR POSITION DETERMINING METHOD AND REMOTE CONTROL DEVICE", which is incorporated herein by reference in its entirety.

TECHNICAL FIELD

The present invention relates to the field of remote control device technologies, and in particular, to a cursor position determining method and a remote control device.

BACKGROUND

When a user controls a smart television by using a remote control device, if the remote control device is set to an air mouse mode, a cursor corresponding to the remote control device may be displayed on a screen of the smart television. When the user adjusts a position of the remote control device, the cursor on the screen of the smart television also moves correspondingly.

Currently, a position relationship between the remote control device and the screen of the smart television affects a movement distance of the cursor on the screen of the smart television. How to make movement of the cursor on the screen of the smart television not affected by the position relationship between the remote control device and the screen of the smart television is an urgent problem to be resolved.

SUMMARY

This application provides a cursor position determining method and a remote control device, to resolve a problem that when a distance between the remote control device and a screen device varies or a pointing direction of the remote control device varies, if the remote control device is deflected by a same angle, a distance by which a cursor moves on the screen device varies.

According to a first aspect, an embodiment of this application provides a cursor position determining method. The method includes: A remote control device determines a first deflection angle of a pointing direction of the remote control device relative to a first reference line when the pointing direction of the remote control device is deflected, where the first reference line is a connection line between a position of the remote control device and a central position of a screen device; the remote control device determines a first offset distance based on the first deflection angle and a first virtual arc surface, where the remote control device is located inside an arc of the first virtual arc surface, the screen device is located outside the arc of the first virtual arc surface, a central position of the first virtual arc surface is on the first reference line, and a tangent at the central position of the first virtual arc surface is perpendicular to the first reference line; and the remote control device determines, based on the central position of the screen device and the first offset distance, a cursor position that is of a cursor corresponding to the remote control device and that is on the screen device. In this method, when a distance between the remote control device and the screen device varies or the pointing direction of the remote control device varies, if the remote control device is deflected by a same angle, a distance by which the cursor moves on the screen device is still the same, so that a user can accurately control movement accuracy of the cursor. In this way, user experience is improved.

In a possible design, the first deflection angle includes a first horizontal deflection angle and a first vertical deflection angle. That the remote control device determines the first deflection angle of the pointing direction of the remote control device relative to the first reference line may include: The remote control device uses an included angle between the pointing direction of the remote control device and a first reference plane as the first horizontal deflection angle, where the first reference plane is a plane that is perpendicular to a horizontal plane and that includes the first reference line; and the remote control device uses an included angle between the pointing direction of the remote control device and a second reference plane as the first vertical deflection angle, where the second reference plane is a plane that is parallel to the horizontal plane and that includes the first reference line. According to this design, a method for determining the first deflection angle is provided.

In a possible design, the first offset distance includes a first horizontal offset distance and a first vertical offset distance. That the remote control device determines the first offset distance based on the first deflection angle and the first virtual arc surface may include: The remote control device uses a product of a radius length of the first virtual arc surface and the first horizontal deflection angle as the first horizontal offset distance; and the remote control device uses a product of the radius length of the first virtual arc surface and the first vertical deflection angle as the first vertical offset distance.

According to this design, a method for determining the first offset distance is provided.

In a possible design, the first offset distance includes a first horizontal offset distance and a first vertical offset distance. That the remote control device determines the first offset distance based on the first deflection angle and the first virtual arc surface may include: The remote control device uses a product of a radius length of the first virtual arc surface and the first horizontal deflection angle as a second horizontal offset distance, and uses a product of a first horizontal adjustment ratio and the second horizontal offset distance as the first horizontal offset distance; and the remote control device uses a product of the radius length of the first virtual arc surface and the first vertical deflection angle as a second vertical offset distance, and uses a product of the first vertical adjustment ratio and the second vertical offset distance as the first vertical offset distance. According to this design, a method for determining the first offset distance is provided.

In a possible design, that the remote control device determines, based on the central position of the screen device and the first offset distance, the cursor position that is of the cursor corresponding to the remote control device and that is on the screen device may include: The remote control device determines a first coordinate value based on the central position of the screen device and the first horizontal offset distance, determines a second coordinate value based on the central position of the screen device and the first vertical offset distance; and the remote control device forms coordinates of the cursor position by using the first coordinate value and the second coordinate value, and determines, based on the coordinates of the cursor position, the cursor position that is of the cursor corresponding to the remote control device and that is on the screen device. According to this design, a method for determining the position of the cursor corresponding to the remote control device is provided.

In a possible design, the method further includes: before determining the first deflection angle of the pointing direction of the remote control device relative to the first reference line when the pointing direction of the remote control device is deflected, the method further includes: The remote control device receives a first operation, where the first operation includes an operation of deflecting the pointing direction of the remote control device, and the radius length of the first virtual arc surface is a first length; or the remote control device receives a second operation, where the second operation includes the first operation and a third operation on a touchpad of the remote control device, and the radius length of the first virtual arc surface is a second length, where the second length is less than the first length. In the foregoing method, when the radius length of the first virtual arc surface is decreased, if the remote control device is deflected by a same angle, a movement speed of the cursor can be decreased, and accuracy of the determined cursor position can be improved.

In a possible design, the method further includes: The remote control device determines the first deflection angle of the pointing direction of the remote control device relative to the first reference line when the remote control device receives a fourth operation, where the fourth operation includes an operation of deflecting the pointing direction of the remote control device and a fifth operation on a touchpad of the remote control device, and the first reference line is a connection line between the position of the remote control device and the central position of the screen device; the remote control device determines a third horizontal offset distance based on the first horizontal deflection angle and a second horizontal adjustment ratio, and determines a third vertical offset distance based on the first vertical deflection angle and a second vertical adjustment ratio; and the remote control device determines, based on the central position of the screen device, the third horizontal offset distance, and the third vertical offset distance, the cursor position that is corresponds to the remote control device and that is on the screen device. According to this design, the cursor position changes with the first horizontal deflection angle and the first vertical deflection angle, and is not affected by the radius length of the first virtual arc surface. Therefore, a convenient cursor position determining method is provided.

In a possible design, the method further includes: The remote control device determines a horizontal movement distance and a vertical movement distance of the remote control device when the remote control device receives a sixth operation on a touchpad, where the sixth operation includes an operation of moving the remote control device and a seventh operation on the touchpad of the remote control device; the remote control device determines a fourth horizontal offset distance based on the horizontal movement distance and a third horizontal adjustment ratio, and determines a fourth vertical offset distance based on the vertical movement distance and a third vertical adjustment ratio; and the remote control device determines, based on the central position of the screen device, the fourth horizontal offset distance, and the fourth vertical offset distance, the cursor position that is of the remote control device and that is on the screen device. According to this design, the cursor position changes with the horizontal movement distance and the vertical movement distance, and is not affected by the radius length of the first virtual arc surface. Therefore, a convenient cursor position determining method is provided.

According to a second aspect, this application further provides a remote control device. The remote control device can implement the method according to any one of the first aspect and the possible implementations of the first aspect. The remote control device may be implemented by using hardware, or may be implemented by hardware executing corresponding software. The hardware or the software includes one or more units or modules corresponding to the foregoing function.

According to a third aspect, an embodiment of this application further provides a remote control device. The remote control device includes modules/units for performing the method according to any one of the first aspect and the possible implementations of the first aspect. These modules/units may be implemented by hardware, or may be implemented by hardware executing corresponding software.

According to a fourth aspect, an embodiment of this application provides a remote control device, including a memory and a processor. The processor is configured to execute a computer program or instructions stored in the memory, so that the head-mounted display device implements the method according to any one of the first aspect and the possible implementations of the first aspect.

According to a fifth aspect, an embodiment of this application further provides a computer-readable storage medium. The computer-readable storage medium includes a computer program. When the computer program is run on a remote control device, the computer-readable storage medium is enabled to implement the method according to any one of the first aspect and the possible implementations of the first aspect.

According to a sixth aspect, an embodiment of this application further provides a computer program product. When the computer program product runs on a remote control device, the remote control device is enabled to implement the method according to any one of the first aspect and the possible implementations of the first aspect.

These or other aspects of this application are more concise and easier to understand in the description of the following embodiments.

BRIEF DESCRIPTION OF DRAWINGS

FIG. 1A is a diagram of a structure of a remote control device according to an embodiment of this application;
FIG. 1B is a diagram of a scenario in which a remote control device is used according to an embodiment of this application;
FIG. 1C is a diagram of a hardware structure of a remote control device according to an embodiment of this application;
FIG. 1D is a diagram of a software structure of a remote control device according to an embodiment of this application;
FIG. 2 is a diagram of a scenario in which a remote control device is used according to an embodiment of this application;
FIG. 3A is a diagram of a scenario in which a remote control device is used according to an embodiment of this application;
FIG. 3B is a diagram of a scenario in which a remote control device is used according to an embodiment of this application;
FIG. 4A is a diagram of a scenario in which a remote control device is used according to an embodiment of this application;
FIG. 4B is a diagram of a scenario in which a remote control device is used according to an embodiment of this application;
FIG. 5 is a schematic flowchart of a cursor position determining method according to an embodiment of this application;
FIG. 6A is a diagram of a structure of a geodetic reference coordinate system according to an embodiment of this application;
FIG. 6B is a diagram of a structure of a geodetic reference coordinate system according to an embodiment of this application;
FIG. 7A is a top view in which a remote control device according to an embodiment of this application;
FIG. 7B is a left view in which a remote control device is used according to an embodiment of this application;
FIG. 7C is a top view in which a remote control device according to an embodiment of this application;
FIG. 7D is a left view in which a remote control device is used according to an embodiment of this application;
FIG. 7E is a top view in which a remote control device according to an embodiment of this application;
FIG. 7F is a left view in which a remote control device is used according to an embodiment of this application;
FIG. 7G is a top view in which a remote control device according to an embodiment of this application;
FIG. 7H is a left view in which a remote control device is used according to an embodiment of this application;
FIG. 8A is a top view in which a remote control device according to an embodiment of this application;
FIG. 8B is a left view in which a remote control device is used according to an embodiment of this application;
FIG. 8C is a top view in which a remote control device according to an embodiment of this application;
FIG. 8D is a left view in which a remote control device is used according to an embodiment of this application;
FIG. 8E is a top view in which a remote control device according to an embodiment of this application;
FIG. 8F is a left view in which a remote control device is used according to an embodiment of this application;
FIG. 8G is a top view in which a remote control device according to an embodiment of this application;
FIG. 8H is a left view in which a remote control device is used according to an embodiment of this application;
FIG. 9 is a diagram of a structure of a position of a remote control device according to an embodiment of this application;

FIG. 10 is a diagram of a structure of a position of a remote control device according to an embodiment of this application;

FIG. 11 is a diagram of a structure of a first reference line according to an embodiment of this application;

FIG. 12 is a diagram of a structure of a first reference line according to an embodiment of this application;

FIG. 13A is a diagram of a structure of an indication direction of a remote control device according to an embodiment of this application;

FIG. 13B is a diagram of a structure of an indication direction of a remote control device according to an embodiment of this application;

FIG. 14A is a diagram of a structure of a first reference line according to an embodiment of this application;

FIG. 14B is a diagram of a structure of a first reference line according to an embodiment of this application;

FIG. 14C is a diagram of a structure of a first reference line according to an embodiment of this application;

FIG. 15A is a diagram of a structure of a pointing direction of a remote control device according to an embodiment of this application;

FIG. 15B is a top view of a pointing direction of a remote control device according to an embodiment of this application;

FIG. 15C is a left view of a pointing direction of a remote control device according to an embodiment of this application;

FIG. 16A is a diagram of a structure of a pointing direction of a remote control device according to an embodiment of this application;

FIG. 16B is a top view of a pointing direction of a remote control device according to an embodiment of this application;

FIG. 16C is a left view of a pointing direction of a remote control device according to an embodiment of this application;

FIG. 17A is a diagram of a structure of a pointing direction of a remote control device according to an embodiment of this application;

FIG. 17B is a top view of a pointing direction of a remote control device according to an embodiment of this application;

FIG. 17C is a left view of a pointing direction of a remote control device according to an embodiment of this application;

FIG. 18A is a diagram of a structure of a first deflection angle according to an embodiment of this application;

FIG. 18B is a top view of a first deflection angle according to an embodiment of this application;

FIG. 18C is a left view of a first deflection angle according to an embodiment of this application;

FIG. 19A is a diagram of a structure of a first deflection angle according to an embodiment of this application;

FIG. 19B is a top view of a first deflection angle according to an embodiment of this application;

FIG. 19C is a left view of a first deflection angle according to an embodiment of this application;

FIG. 20 is a schematic flowchart of a method for determining a first deflection angle according to an embodiment of this application;

FIG. 21A is a diagram of a structure of a second reference line according to an embodiment of this application;

FIG. 21B is a diagram of a structure of a second reference line according to an embodiment of this application;

FIG. 22A is a diagram of a structure of a second reference line according to an embodiment of this application;

FIG. 22B is a diagram of a structure of a second reference line according to an embodiment of this application;

FIG. 22C is a diagram of a structure of a second reference line according to an embodiment of this application;

FIG. 23A is a diagram of a structure of a second deflection angle according to an embodiment of this application;

FIG. 23B is a diagram of a structure of a second deflection angle according to an embodiment of this application;

FIG. 23C is a diagram of a structure of a second deflection angle according to an embodiment of this application;

FIG. 24A is a diagram of a structure of a second deflection angle according to an embodiment of this application;

FIG. 24B is a diagram of a structure of a second deflection angle according to an embodiment of this application;

FIG. 24C is a diagram of a structure of a second deflection angle according to an embodiment of this application;

FIG. 25A is a diagram of a structure of a second deflection angle according to an embodiment of this application;

FIG. 25B is a diagram of a structure of a second deflection angle according to an embodiment of this application;

FIG. 25C is a diagram of a structure of a second deflection angle according to an embodiment of this application;

FIG. 26A is a diagram of a structure of a first deflection angle according to an embodiment of this application;

FIG. 26B is a diagram of a structure of a first deflection angle according to an embodiment of this application;

FIG. 26C is a diagram of a structure of a first deflection angle according to an embodiment of this application;

FIG. 27A is a diagram of a structure of a first deflection angle according to an embodiment of this application;

FIG. 27B is a diagram of a structure of a first deflection angle according to an embodiment of this application;

FIG. 27C is a diagram of a structure of a first deflection angle according to an embodiment of this application;

FIG. 28A is a diagram of a structure of a first deflection angle according to an embodiment of this application;

FIG. 28B is a diagram of a structure of a first deflection angle according to an embodiment of this application;

FIG. 28C is a diagram of a structure of a first deflection angle according to an embodiment of this application;

FIG. 29A is a diagram of a structure of a first deflection angle according to an embodiment of this application;

FIG. 29B is a diagram of a structure of a first deflection angle according to an embodiment of this application;

FIG. 29C is a diagram of a structure of a first deflection angle according to an embodiment of this application;

FIG. 30 is a diagram of a structure of a first virtual arc surface according to an embodiment of this application;
FIG. 31 is a schematic flowchart of a method for determining a first virtual arc surface according to an embodiment of this application;
FIG. 32 is a diagram of a structure of a first virtual arc surface according to an embodiment of this application;
FIG. 33A is a diagram of a structure of a first virtual arc surface according to an embodiment of this application;
FIG. 33B is a diagram of a structure of a second reference position according to an embodiment of this application;
FIG. 33C is a diagram of a structure of a first virtual arc surface according to an embodiment of this application;
FIG. 34A is a diagram of a structure of a cursor position according to an embodiment of this application;
FIG. 34B is a diagram of a structure of a cursor position according to an embodiment of this application;
FIG. 34C is a diagram of a structure of a cursor position according to an embodiment of this application;
FIG. 34D is a diagram of a structure of a cursor position according to an embodiment of this application;
FIG. 35A is a diagram of a structure of a cursor position according to an embodiment of this application;
FIG. 35B is a diagram of a structure of a cursor position according to an embodiment of this application;
FIG. 36 is a schematic flowchart of a cursor position determining method according to an embodiment of this application;
FIG. 37A is a diagram of a structure of a cursor position according to an embodiment of this application;
FIG. 37B is a diagram of a structure of a cursor position according to an embodiment of this application;
FIG. 38 is a schematic flowchart of a cursor position determining method according to an embodiment of this application;
FIG. 39A is a diagram of a structure of a cursor position according to an embodiment of this application;
FIG. 39B is a diagram of a structure of a cursor position according to an embodiment of this application; and
FIG. 40 is a diagram of a hardware structure of a head-mounted display device according to an embodiment of this application.

DESCRIPTION OF EMBODIMENTS

The following describes the technical solutions in embodiments of this application with reference to the accompanying drawings in embodiments of this application.

The following describes some terms in embodiments of this application, to facilitate understanding of a person skilled in the art.

A remote control device that has an air mouse mode may be referred to as a fly mouse, an air mouse, an air mouse, or a fly mouse. The remote control device is equipped with a gyroscope, and the remote control device may sense changes in a direction and a speed through the gyroscope. When the remote control device is waved in the air, a cursor corresponding to the remote control device can be accurately controlled to move on a screen of an electronic device.

It should be understood that the electronic device in embodiments of this application may be a smart home device (for example, a smart television, a smart projector, a smart speaker, or a smart camera), an augmented reality (augmented reality, AR)/virtual reality (virtual reality, VR) device, a vehicle-mounted device, a wearable device (for example, a watch, a band, a helmet, or a headset), a personal digital assistant (personal digital assistant, PDA), an ultra-mobile personal computer (ultra-mobile personal computer, UMPC), a notebook computer, a tablet computer, a netbook, a mobile phone, or the like. This is not limited herein.

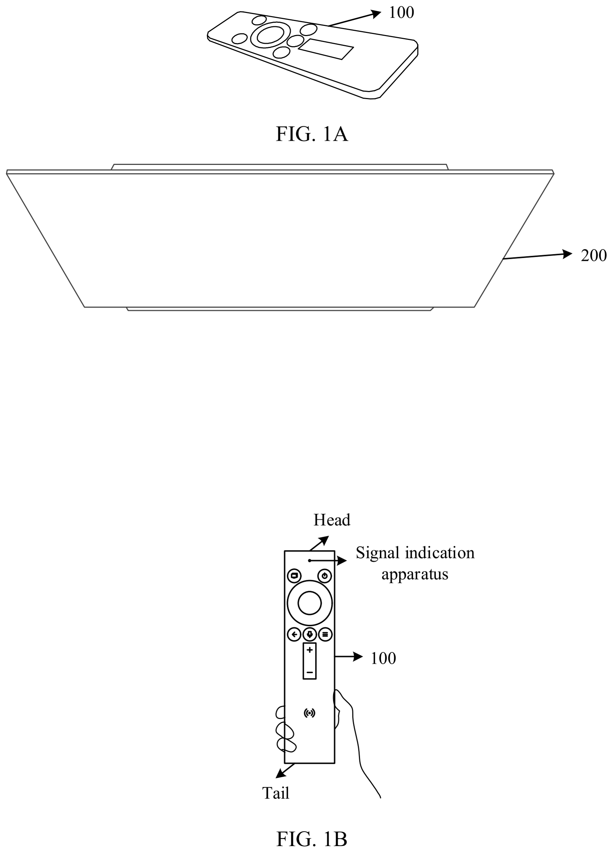

FIG. 1A is a three-dimensional diagram of a remote control device 100 according to an embodiment of this application. As shown in FIG. 1A, the remote control device 100 includes a plurality of buttons and a touchpad. FIG. 1B is a diagram of a scenario in which a user uses the remote control device 100 to control a screen device 200 according to an embodiment of this application. As shown in FIG. 1B, the remote control device 100 may further include a signal indication apparatus. In this application, an end that is of the remote control device 100 and that includes the signal indication apparatus is referred to as the head of the remote control device 100, and an opposite end of the end that includes the signal indication apparatus is referred to as the tail. When using the remote control device to control the screen device, the user holds the remote control device near the tail, and the head of the remote control device usually points to the screen device. In the following, a direction pointed to by the head of the remote control device is referred to as a pointing direction of the remote control device. In view of the remote control device shown in FIG. 1A and FIG. 1B, the remote control device may further have another variant structure. This is not limited herein.

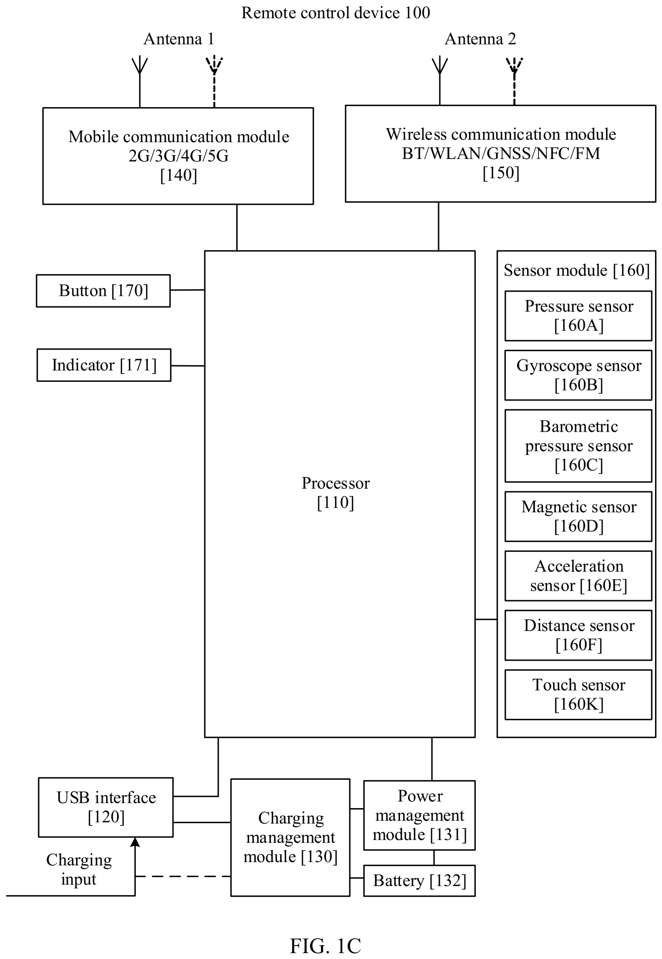

A diagram of a hardware structure corresponding to the remote control device 100 is shown in FIG. 1C. The remote control device 100 may include a processor 110, a universal serial bus (universal serial bus, USB) interface 120, a charging management module 130, a power management module 131, a battery 132, an antenna 1, an antenna 2, a mobile communication module 140, a wireless communication module 150, a sensor module 160, a button 170, an indicator 171, and the like. The sensor module 160 may include a pressure sensor 160A, a gyroscope sensor 160B, a barometric pressure sensor 160C, a magnetic sensor 160D, an acceleration sensor 160E, a distance sensor 160F, a touch sensor 160K, and the like.

It may be understood that the structure shown in embodiments of this application does not constitute a specific limitation on the remote control device 100. In some other embodiments of this application, the remote control device 100 may include more or fewer components than those shown in FIG. 1C, or combine some components, or split some components, or have different component arrangements. The components shown in FIG. 1C may be implemented by using hardware, software, or a combination of software and hardware.

The following describes in detail the components of the remote control device 100 shown in FIG. 1C.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and the like. Different processing units may be separate devices, or may be integrated into one or more processors. The controller may be a nerve center and a command center of the remote control device 100. The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the instructions or the data may be directly invoked from the memory, so that repeated access can be avoided, and a waiting time of the processor 110 can be reduced, thereby improving system efficiency.

In some embodiments, the processor 110 may include one or more interfaces. For example, the interface may include an inter-integrated circuit (inter-integrated circuit, I2C) interface, a universal asynchronous receiver/transmitter (universal asynchronous receiver/transmitter, UART) interface, and/or a universal serial bus (universal serial bus, USB) interface.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be coupled to the touch sensor 160K, a charger, a flash, a camera, and the like through different I2C bus interfaces. For example, the processor 110 may be coupled to the touch sensor 160K through the I2C interface, so that the processor 110 communicates with the touch sensor 160K through the I2C bus interface, to implement a touch function of the remote control device 100.

The UART interface is a universal serial data bus, and is configured to perform asynchronous communication. The bus may be a two-way communication bus, and converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function.

The USB interface 120 is a port that conforms to a USB standard specification, and may be specifically a mini USB interface, a micro USB interface, a USB Type-C interface, or the like. The USB interface 120 may be configured to connect to the charger to charge the remote control device 100, or may be configured to transmit data between the remote control device 100 and a peripheral device, or may be configured to connect to a headset, to play an audio by using the headset. The interface may be further configured to be connected to another electronic device, for example, a mobile phone, or the like.

It can be understood that an interface connection relationship between modules illustrated in embodiments of this application is merely an illustrative description, and does not constitute a limitation on a structure of the remote control device 100. In some other embodiments of this application, the remote control device 100 may alternatively use an interface connection manner different from that in the foregoing embodiment, or use a combination of a plurality of interface connection manners.

The charging management module 130 is configured to receive a charging input from the charger. The charger may be a wireless charger or a wired charger. In some embodiments of wired charging, the charging management module 130 may receive a charging input from the wired charger through the USB interface 120. In some embodiments of wireless charging, the charging management module 130 may receive a wireless charging input through a wireless charging coil of the remote control device 100. When charging the battery 132, the charging management module 130 may further supply power to the electronic device by using the power management module 131.

The power management module 131 is configured to connect to the battery 132, the charging management module 130, and the processor 110. The power management module 131 receives an input from the battery 132 and/or the charging management module 130, and supplies power to the processor 110, the wireless communication module 150, and the like. The power management module 131 may be further configured to monitor parameters such as a battery capacity, a battery cycle count, and a battery health status (electric leakage or impedance). In some other embodiments, the power management module 131 may alternatively be disposed in the processor 110. In some other embodiments, the power management module 131 and the charging management module 130 may alternatively be disposed in a same device.

A wireless communication function of the remote control device 100 may be implemented through the antenna 1, the antenna 2, the mobile communication module 140, the wireless communication module 150, the modem processor, the baseband processor, and the like.

The antenna 1 and the antenna 2 are configured to: send and receive an electromagnetic wave signal. Each antenna in the remote control device 100 may be configured to cover one or more communication bands. Different antennas may further be multiplexed, to improve antenna utilization. For example, the antenna 1 may be multiplexed as a diversity antenna in a wireless local area network. In other embodiments, the antenna may be used in combination with a tuning switch.

The mobile communication module 140 may provide a solution, applied to the remote control device 100, to wireless communication including 2G, 3G, 4G, 5G, and the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering and amplification on the received electromagnetic wave, and transmit a processed electromagnetic wave to the modem processor for demodulation. The mobile communication module 140 may further amplify a signal modulated by the modem processor, and convert the signal into an electromagnetic wave for radiation through the antenna 1. In some embodiments, at least some functional modules of the mobile communication module 140 may be disposed in the processor 110. In some embodiments, at least some functional modules in the mobile communication module 140 and at least some modules in the processor 110 may be disposed in a same device.

The wireless communication module 150 may provide a wireless communication solution that is applied to the remote control device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processor module. The wireless communication module 150 receives an electromagnetic wave through the antenna 2, performs frequency modulation and filtering processing on an electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 2.

In some embodiments, in the remote control device 100, the antenna 1 and the mobile communication module 140 are coupled, and the antenna 2 and the wireless communication module 150 are coupled, so that the remote control device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The pressure sensor 160A is configured to sense a pressure signal, and can convert the pressure signal into an electrical signal. There are many types of pressure sensors 160A, such as a resistive pressure sensor, an inductive pressure sensor, and a capacitive pressure sensor. The capacitive pressure sensor may include at least two parallel plates made of conductive materials. When a force is applied to the pressure sensor 160A, capacitance between electrodes changes. The remote control device 100 determines pressure intensity based on the change in the capacitance. The remote control device 100 may calculate a touch position based on a detection signal of the pressure sensor 160A. In some embodiments, touch operations that are performed at a same touch position but have different touch operation intensity may correspond to different operation instructions.

The gyroscope sensor 160B may be configured to determine a moving posture of the remote control device 100. In some embodiments, an angular velocity of the remote control device 100 around three axes (namely, axes x, y, and z) may be determined through the gyroscope sensor 160B. The gyroscope sensor 160B may be configured to implement image stabilization during shooting. The gyroscope sensor 160B may also be used in a navigation scenario and a somatic game scenario.

The barometric pressure sensor 160C is configured to measure barometric pressure. In some embodiments, the remote control device 100 calculates an altitude through the barometric pressure measured by the barometric pressure sensor 160C, to assist in positioning and navigation.

The magnetic sensor 160D includes a Hall effect sensor. The remote control device 100 may detect opening and closing of a flip cover through the magnetic sensor 160D. In some embodiments, when the remote control device 100 is a flip-type head-mounted display device, the remote control device 100 may detect opening and closing of the flip cover based on the magnetic sensor 160D. Further, a feature, for example, automatic unlocking of the flip cover is set based on a detected opening or closing state of the flip cover.

The acceleration sensor 160E may detect magnitudes of accelerations in various directions (usually on three axes) of the remote control device 100. When the remote control device 100 is stationary, a magnitude and a direction of gravity may be detected. The acceleration sensor 160E may be further configured to identify a posture of the remote control device, and is used in an application like switching between a landscape mode and a portrait mode or a pedometer.

The distance sensor 160F is configured to measure a distance. The remote control device 100 may measure the distance in an infrared manner or a laser manner. In some embodiments, in a shooting scenario, the remote control device 100 may measure a distance through the distance sensor 160F, to implement quick focusing.

The touch sensor 160K is also referred to as a touch panel. The touch sensor 160K is configured to detect a touch operation performed on or near the touch sensor. The touch sensor may transfer the detected touch operation to the application processor, to determine a type of a touch event. In some other embodiments, the touch sensor 160K may be disposed on a surface of the remote control device 100.

The button 170 includes a power-on button, a volume button, and the like. The button 170 may be a mechanical button, may be a touch-sensitive button. The remote control device 100 may receive a button input, and generate a button signal input related to a user setting and function control of the remote control device 100.

The indicator 171 may be an indicator light, and may indicate a charging status or a power change, or may indicate a message, a missed call, a notification, or the like.

A software system of the remote control device 100 may use a layered architecture. In this embodiment of this application, an Android system with a layered architecture is used as an example to describe a software structure of the remote control device 100.

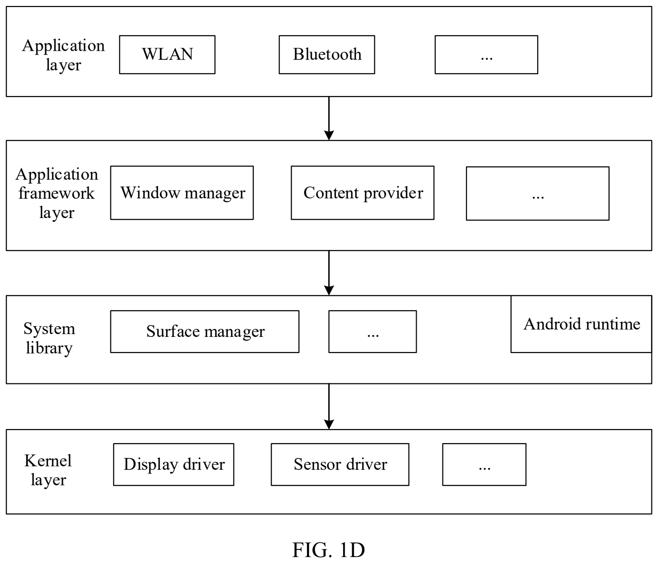

FIG. 1D is a block diagram of a software structure of the remote control device 100 according to an embodiment of this application.

In the layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 1D, the application packages may include applications such as WLAN and Bluetooth.

The application framework layer provides an application programming interface (application programming interface, API) and a programming framework for an application in the application layer. The application framework layer includes some predefined functions.

As shown in FIG. 1D, the application framework layer may include a window manager, a content provider, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager).

The surface manager is configured to manage a display subsystem and provide fusion of 2D and 3D layers for a plurality of applications.

The kernel layer is a layer between hardware and software. The kernel layer includes at least a display driver and a sensor driver.

With reference to the accompanying drawings, a position relationship between the remote control device and a screen of a smart television is further described by using an example in which a screen device is the screen of the smart television.

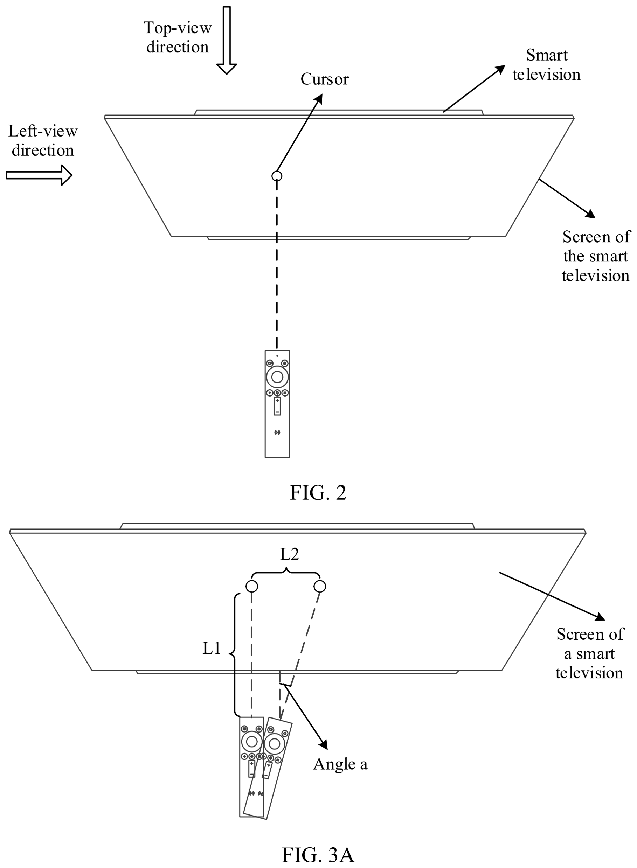

When using the remote control device to control the smart television, a user may operate a button on the remote control device to switch the remote control device to an air mouse mode. As shown in a diagram of a scenario in FIG. 2, after the remote control device is switched to the air mouse mode, the remote control device may transmit cursor position information to the smart television, and the smart television may display, based on the cursor position information, a cursor at a position that is on the screen of the smart television and that corresponds to the cursor position information.

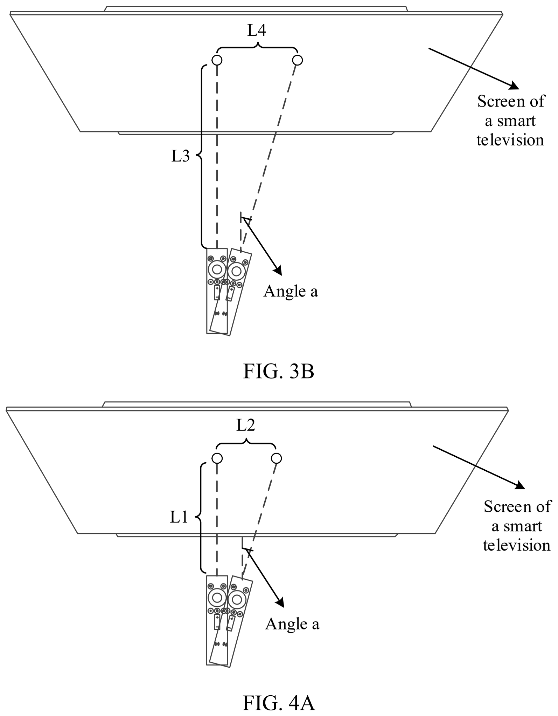

As shown in a diagram of a scenario in FIG. 3A, a distance between the remote control device and the screen of the smart television is L1. The user holds the remote control device to make a pointing direction of the remote control device deflect, on a horizontal plane, by an angle a from a direction perpendicular to the screen of the smart television, and a distance by which the cursor moves on the screen of the smart television is L2. As shown in a diagram of a scenario in FIG. 3B, a distance between the remote control device and the screen of the smart television is L3, where L3 is greater than L1. The user holds the remote control device to make a pointing direction of the remote control device deflect, on a horizontal plane, by an angle a from a direction perpendicular to the screen of the smart television, but a distance L4 by which the cursor moves on the screen of the smart television is greater than L2. In other words, when a distance between the remote control device and the screen of the smart television varies, if the remote control device is deflected by a same angle, a distance by which the cursor moves on the screen of the smart television varies. To be specific, when the remote control device is deflected by a same angle, a greater distance between the remote control device and the screen of the smart television indicates a greater distance by which the cursor moves on the screen of the smart television, and a smaller distance between the remote control device and the screen of the smart television indicates a smaller distance by which the cursor moves on the screen of the smart television. As a result, movement accuracy of the cursor is affected by the distance between the remote control device and the screen of the smart television when the user uses the remote control device, and the user cannot accurately control the movement accuracy of the cursor. This reduces user experience.

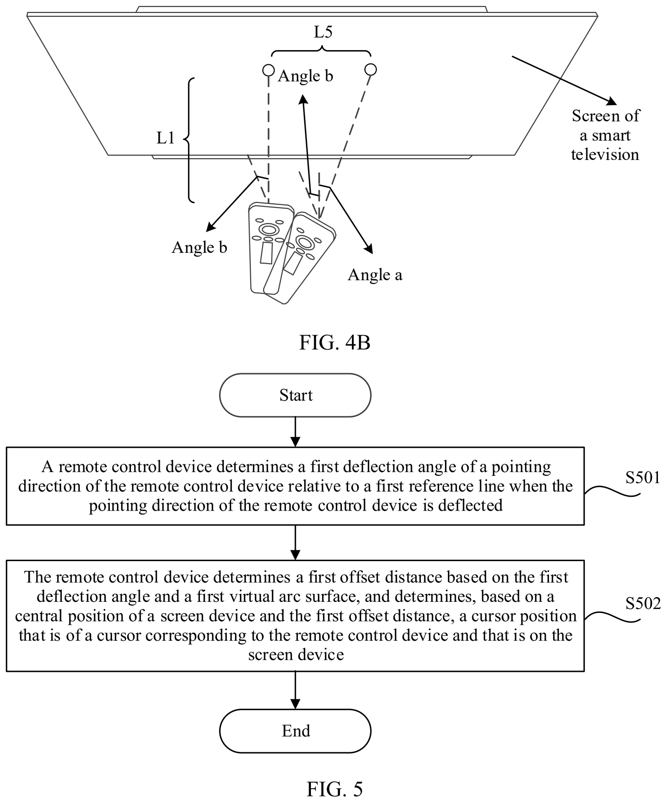

As shown in a diagram of a scenario in FIG. 4A, a distance between the remote control device and the screen of the smart television is L1. The user holds the remote control device to make a pointing direction of the remote control device deflect, on a horizontal plane, by an angle a from a direction perpendicular to the screen of the smart television (that is, an included angle between the pointing direction of the remote control device and the horizontal plane is 0), and a distance by which the cursor moves on the screen of the smart television is L2. As shown in a diagram of a scenario in FIG. 4B, a distance between the remote control device and the screen of the smart television is L1. The user holds the remote control device to make a pointing direction of the remote control device deflect, on a horizontal plane, by an angle a from an included angle b between the pointing direction of the remote control device and the horizontal plane, but a distance L5 by which the cursor moves on the screen of the smart television is greater than L2. In other words, when a pointing direction of the remote control device varies, if the remote control device is deflected by a same angle, a distance by which the cursor moves on the screen of the smart television varies. To be specific, when the remote control device is deflected by a same angle, a greater included angle between the pointing direction of the remote control device and the horizontal plane indicates a greater distance by which the cursor moves on the screen of the smart television, and a smaller included angle between the pointing direction of the remote control device and the horizontal plane indicates a smaller distance by which the cursor moves on the screen of the smart television. As a result, movement accuracy of the cursor is affected by the pointing direction of the remote control device when the user uses the remote control device, and the user cannot accurately control the movement accuracy of the cursor. This reduces user experience.

The following embodiments may all be implemented in an electronic device (for example, the remote control device 100) having the foregoing hardware structure. In the following embodiments, the remote control device 100 is used as an example, and a cursor position determining method provided in embodiments of this application is described in detail with reference to the accompanying drawings.

FIG. 5 is a schematic flowchart of an example of a cursor position determining method according to an embodiment of this application. The cursor position determining method may include the following steps.

S501: A remote control device determines a first deflection angle of a pointing direction of the remote control device relative to a first reference line when the pointing direction of the remote control device is deflected.

Before the remote control device performs S501, the remote control device receives a first operation. The first operation includes an operation of deflecting the pointing direction of the remote control device by a user. Deflection of the pointing direction of the remote control device includes deflection in a horizontal direction and/or deflection in a vertical direction.

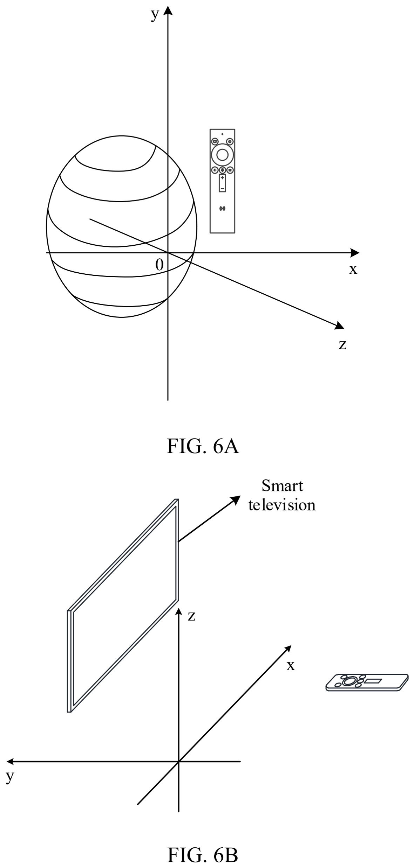

To facilitate definition of a position of the remote control device, a geodetic reference coordinate system may be established. As shown in FIG. 6A, a definition manner of the geodetic reference coordinate system is as follows: A positive direction of an x axis is tangent to a ground at a current position of the remote control device and points to the east; a positive direction of a y axis is tangent to the ground and points to a magnetic north pole, and an xOy plane formed by the x axis and the y axis is a horizontal plane; and a positive direction of a z axis is perpendicular to the horizontal plane and points to the sky. The geodetic reference coordinate system shown in FIG. 6A is used in a scenario including the remote control device and a smart television, as shown in FIG. 6B. In the scenario shown in FIG. 6B, several possible implementations of a position relationship between the remote control device and a screen of the smart television are provided.

Implementation 1: In the geodetic coordinate system, a first plane of the remote control device in FIG. 6B is parallel to the horizontal plane. The first plane is a plane on which a button of the remote control device is located. The screen of the smart television in FIG. 6B is parallel to an xOz plane formed by the x axis and the z axis.

The first plane of the remote control device being parallel to the horizontal plane may be understood as follows: An included angle between the first plane of the remote control device and the horizontal plane is 0, or an included angle between the first plane of the remote control device and the horizontal plane is $\Theta$, where $\Theta$ is greater than 0 and less than a first angle threshold. The first angle threshold may be set based on an actual requirement. This is not limited in this specification.

The screen of the smart television being parallel to the xOz plane may be understood as follows: An included angle between the screen of the smart television and the xOz plane is 0, or an included angle between the screen of the smart television and the xOz plane is $\Theta$, where $\Theta$ is greater than 0 and less than the first angle threshold. The first angle threshold may be set based on an actual requirement. This is not limited in this specification.

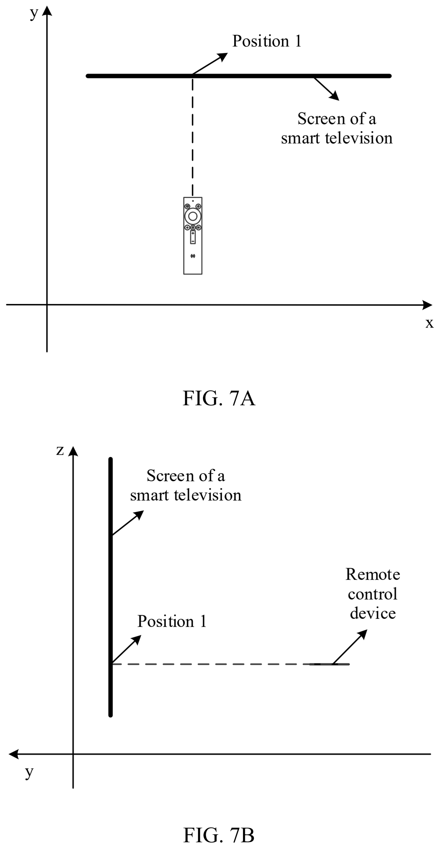

In Implementation 1, a top view (namely, a view seen in a negative direction of the z axis) corresponding to the scenario shown in FIG. 6B in the geodetic coordinate system is shown in FIG. 7A, and a left view (namely, a view seen in a negative direction of the x axis) corresponding to the scenario shown in FIG. 6B is shown in FIG. 7B.

After the remote control device is turned on, when the head of the remote control device points to the screen of the smart television, a cursor may be displayed on the screen of the smart television. A position of the cursor is a position at which the remote control device can control the screen of the smart television. For example, in the top view shown in FIG. 7A and the left view shown in FIG. 7B, the first plane of the remote control device is parallel to the horizontal plane (namely, the xOy plane in the geodetic coordinate system), and the head of the remote control device points to a position 1 on the screen of the smart television. The cursor corresponding to the remote control device is displayed at the position 1 on the screen of the smart television. The user may hold the remote control device and adjust the pointing direction of the remote control device, to change a position at which the screen of the smart television needs to be controlled. Adjusting the pointing direction of the remote control device includes deflection in the horizontal direction and/or deflection in the vertical direction. The following provides three possible implementations.

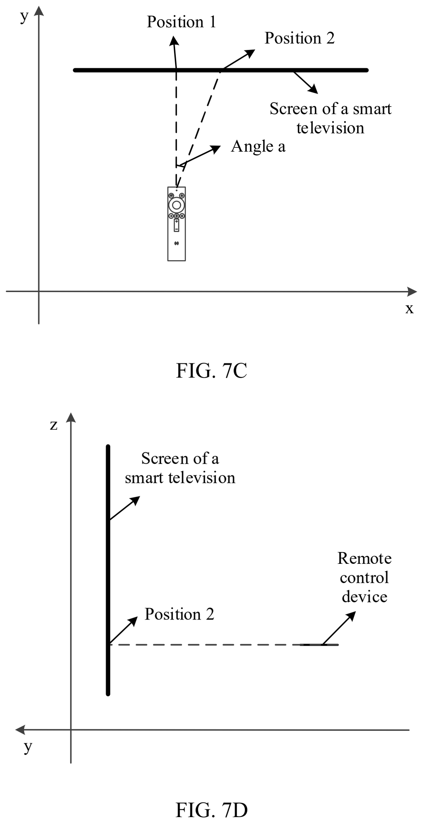

In a first possible implementation, the remote control device is deflected in the horizontal direction. To be specific, the tail of the remote control device is fixed, and the head of the remote control device is deflected by an angle a (where a is greater than 0) in the positive direction of the x axis on the horizontal plane. As shown in a top view in FIG. 7C and a left view in FIG. 7D, a cursor corresponding to the deflected remote control device is displayed at a position 2 on the screen of the smart television. It can be learned from FIG. 7A, FIG. 7B, FIG. 7C, and FIG. 7D, that when the head of the remote control device is deflected by the angle a in the positive direction of the x axis on the horizontal plane, the cursor also moves by a specific distance in the positive direction of the x axis on the screen of the smart television. In some embodiments, alternatively, the tail of the remote control device may be fixed, and the head of the remote control device is deflected by the angle a in the negative direction of the x axis on the horizontal plane. Details are not described herein.

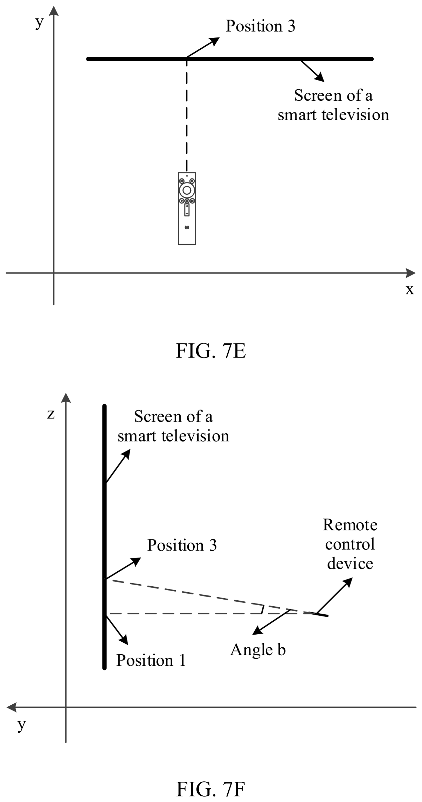

In a second possible implementation, the remote control device is deflected in the vertical direction. To be specific, the tail of the remote control device is fixed, and the head of the remote control device is deflected by an angle b (where b is greater than 0) in the positive direction of the z axis on a yOz plane formed by the y axis and the z axis. As shown in a top view in FIG. 7E and a left view in FIG. 7F, a cursor corresponding to the deflected remote control device is displayed at a position 3 on the screen of the smart television. It can be learned from FIG. 7A, FIG. 7B, FIG. 7E, and FIG. 7F that, when the head of the remote control device is deflected by the angle b in the positive direction of the z axis on the yOz plane, the cursor also moves by a specific distance in the positive direction of the z axis on the screen of the smart television. In some embodiments, alternatively, the tail of the remote control device may be fixed, and the head of the remote control device is rotated by the angle b in the negative direction of the z axis on the yOz plane. Details are not described herein.

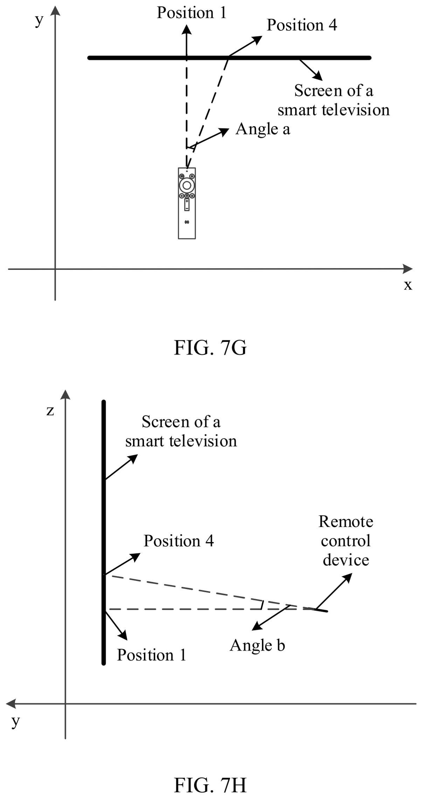

In a third possible implementation, the remote control device is deflected in both the horizontal direction and the vertical direction. To be specific, the tail of the remote control device is fixed, the head of the remote control device is deflected by an angle a in the positive direction of the x axis on the horizontal plane, and the head of the remote control device is deflected by an angle b in the positive direction of the z axis on a yOz plane formed by the y axis and the z axis (where a is greater than 0, and b is greater than 0). As shown in a top view in FIG. 7G and a left view in FIG. 7H, a cursor corresponding to the deflected remote control device is displayed at a position 4 on the screen of the smart television. It can be learned from FIG. 7A, FIG. 7B, FIG. 7G, and FIG. 7H that, when the head of the remote control device is deflected by the angle a in the positive direction of the x axis on the horizontal plane, the cursor also moves by a specific distance in the positive direction of the x axis on the screen of the smart television, and when the head of the remote control device is deflected by the angle b in the positive direction of the z axis on the yOz plane, the cursor also moves by a specific distance in the positive direction of the z axis on the screen of the smart television. In some embodiments, alternatively, the tail of the remote control device may be fixed, and the head of the remote control device is deflected by the angle a in the negative direction of the x axis on the horizontal plane. In addition, alternatively, the tail of the remote control device may be fixed, and the head of the remote control device is rotated by the angle b in the negative direction of the z axis on the yOz plane. Details are not described herein.

Implementation 2: In the geodetic coordinate system, a first plane of the remote control device in FIG. 6B is parallel to a second plane. An included angle between the second plane and the horizontal plane is an angle c, the first plane is a plane on which a button of the remote control device is located, the angle c is greater than 0 degrees and less than 180 degrees, and the screen of the smart television in FIG. 6B is parallel to an xOz plane formed by the x axis and the z axis.

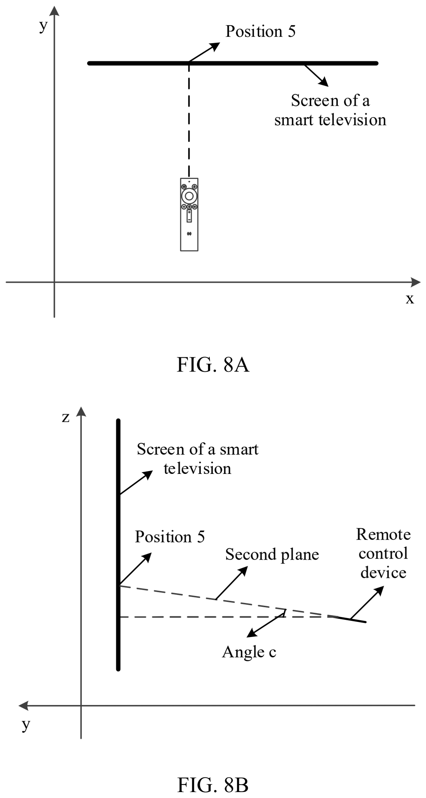

In Implementation 2, a top view (namely, a view seen in a negative direction of the z axis) corresponding to the scenario shown in FIG. 6B in the geodetic coordinate system is shown in FIG. 8A, and a left view (namely, a view seen in a negative direction of the x axis) corresponding to the scenario shown in FIG. 6B is shown in FIG. 8B.

After the remote control device is turned on, when the head of the remote control device points to the screen of the smart television, a cursor may be displayed on the screen of the smart television. A position of the cursor is a position at which the remote control device can control the screen of the smart television. For example, in the top view shown in FIG. 8A and the left view shown in FIG. 8B, an included angle between the first plane of the remote control device and the horizontal plane is the angle c, and the head of the remote control device points to a position 5 on the screen of the smart television. The cursor corresponding to the remote control device is displayed at the position 5 on the screen of the smart television. The user may hold the remote control device and adjust the pointing direction of the remote control device, to change a position at which the screen of the smart television needs to be controlled. Adjusting the pointing direction of the remote control device includes deflection in the horizontal direction and/or deflection in the vertical direction. The following provides three possible implementations.

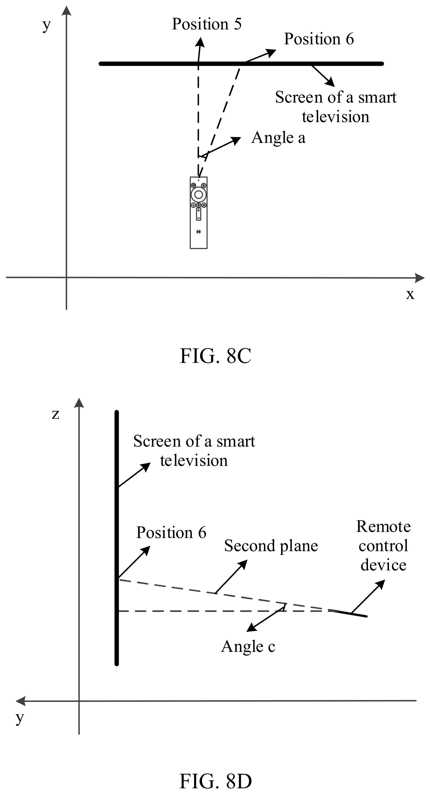

In a first possible implementation, the remote control device is deflected in the horizontal direction. To be specific, the tail of the remote control device is fixed, and the head of the remote control device is deflected by an angle a (where a is greater than 0) in the positive direction of the x axis on the second plane. As shown in a top view in FIG. 8C and a left view in FIG. 8D, a cursor corresponding to the deflected remote control device is displayed at a position 6 on the screen of the smart television. It can be learned from FIG. 8A, FIG. 8B, FIG. 8C, and FIG. 8D that, when the head of the remote control device is deflected by the angle a in the positive direction of the x axis on the second plane, the cursor also moves by a specific distance in the positive direction of the x axis on the screen of the smart television. In some embodiments, alternatively, the tail of the remote control device may be fixed, and the head of the remote control device is deflected by the angle a in the negative direction of the x axis on the second plane. Details are not described herein.

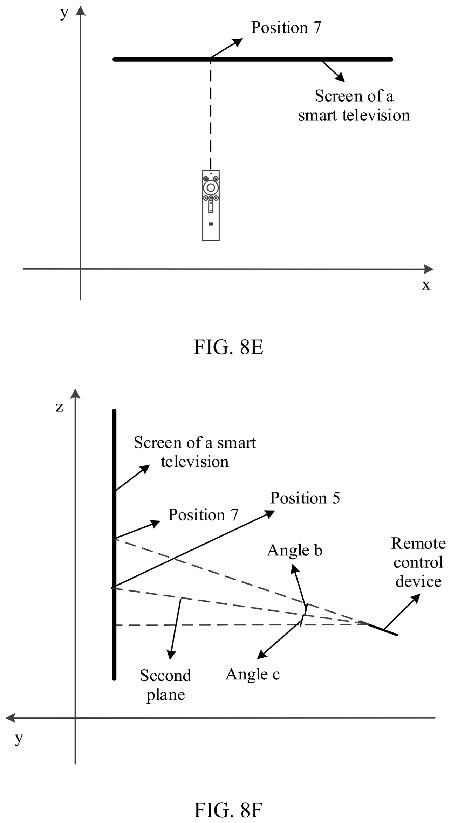

In a second possible implementation, the remote control device is deflected in the vertical direction. To be specific, the tail of the remote control device is fixed, and the head of the remote control device is deflected by an angle b (where b is greater than 0) in the positive direction of the z axis on a yOz plane formed by the y axis and the z axis. As shown in a top view in FIG. 8E and a left view in FIG. 8F, a cursor corresponding to the deflected remote control device is displayed at a position 7 on the screen of the smart television. It can be learned from FIG. 8A, FIG. 8B, FIG. 8E, and FIG. 8F that, when the head of the remote control device is deflected by the angle b in the positive direction of the z axis on the yOz plane, the cursor also moves by a specific distance in the positive direction of the z axis on the screen of the smart television. In some embodiments, alternatively, the tail of the remote control device may be fixed, and the head of the remote control device is rotated by the angle b in the negative direction of the z axis on the yOz plane. Details are not described herein.

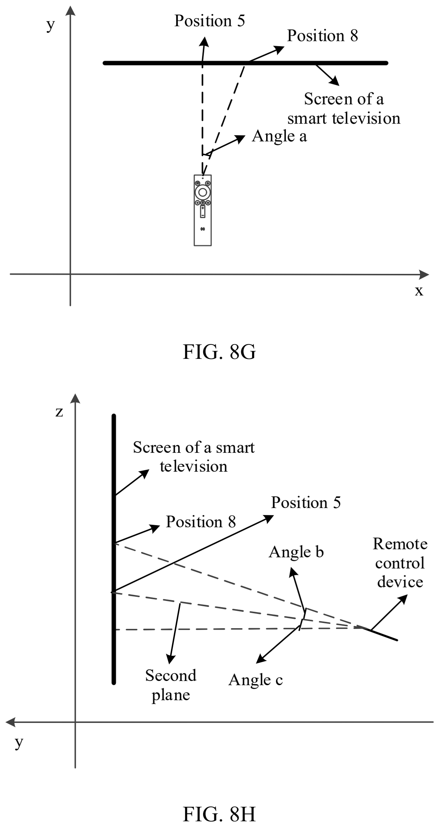

In a third possible implementation, the remote control device is deflected in both the horizontal direction and the vertical direction. To be specific, the tail of the remote control device is fixed, the head of the remote control device is deflected by an angle a in the positive direction of the x axis on the second plane, and the head of the remote control device is deflected by an angle b in the positive direction of the z axis on a yOz plane formed by the y axis and the z axis (where a is greater than 0, and b is greater than 0). As shown in a top view in FIG. 8G and a left view in FIG. 8H, a cursor corresponding to the deflected remote control device is displayed at a position 8 on the screen of the smart television. It can be learned from FIG. 8A, FIG. 8B, FIG. 8G, and FIG. 8H that, when the head of the remote control device is deflected by the angle a in the positive direction of the x axis on the second plane, the cursor also moves by a specific distance in the positive direction of the x axis on the screen of the smart television, and when the head of the remote control device is deflected by the angle b in the positive direction of the z axis on the yOz plane, the cursor also moves by a specific distance in the positive direction of the z axis on the screen of the smart television. In some embodiments, alternatively, the tail of the remote control device may be fixed, and the head of the remote control device is deflected by the angle a in the negative direction of the x axis on the second plane. In addition, alternatively, the tail of the remote control device may be fixed, and the head of the remote control device is rotated by the angle b in the negative direction of the z axis on the yOz plane. Details are not described herein.

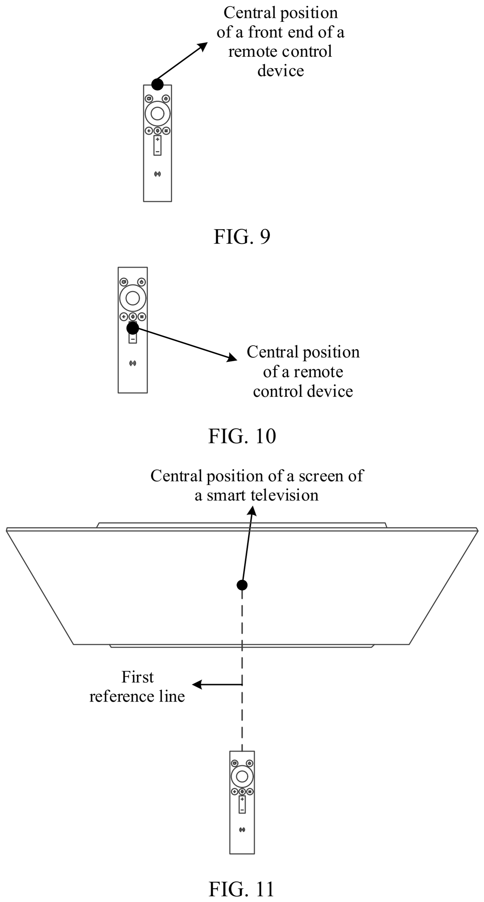

In this embodiment of this application, the first reference line is determined based on the position of the remote control device and a central position of a screen device. The position of the remote control device may be a central position of the head of the remote control device (referring to FIG. 9), or may be determined by a central position of the remote control device (referring to FIG. 10), or may be determined in another manner. This is not limited herein.

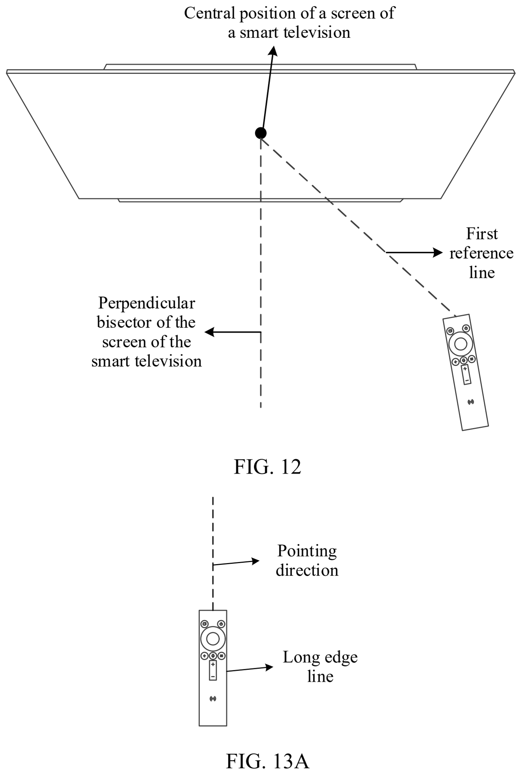

In a possible implementation, a connection line between the position of the remote control device and the central position of the screen device is used as the first reference line. The position of the remote control device is not fixed, and the user may adjust the position of the remote control device at any time. When the screen device is fixed, the first reference line changes with the position of the remote control device. For example, the screen device is the screen of the smart television. As shown in FIG. 11, if the position of the remote control device is in front of a central position of the screen, the first reference line is perpendicular to a plane on which the screen of the smart television is located. In other words, the first reference line is a perpendicular bisector of the screen of the smart television. For example, as shown in FIG. 12, if the position of the remote control device is not in front of the central position of the screen, there is an included angle between the first reference line and the perpendicular bisector of the screen of the smart television.

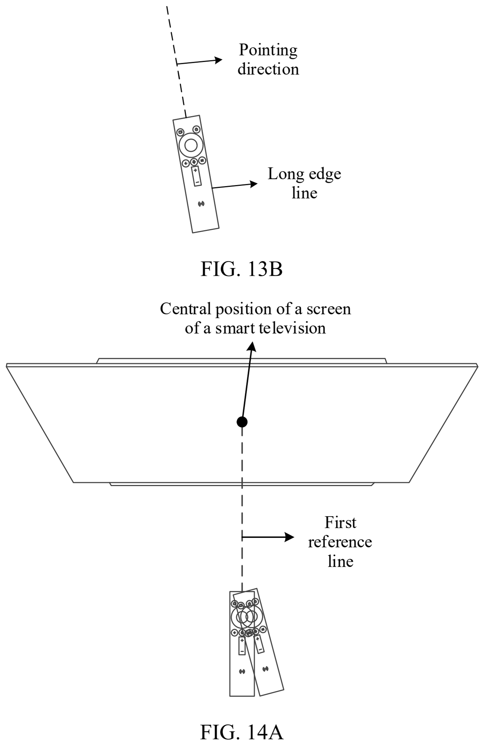

As shown in FIG. 13A and FIG. 13B, the pointing direction of the remote control device may be considered as a straight line that starts from the position of the remote control device and that is parallel to a long edge line of the remote control device. The pointing direction of the remote control device is affected by the position of the remote control device.

The first reference line is not affected by the pointing direction of the remote control device. The following uses an example in which the screen device is the screen of the smart television for description.

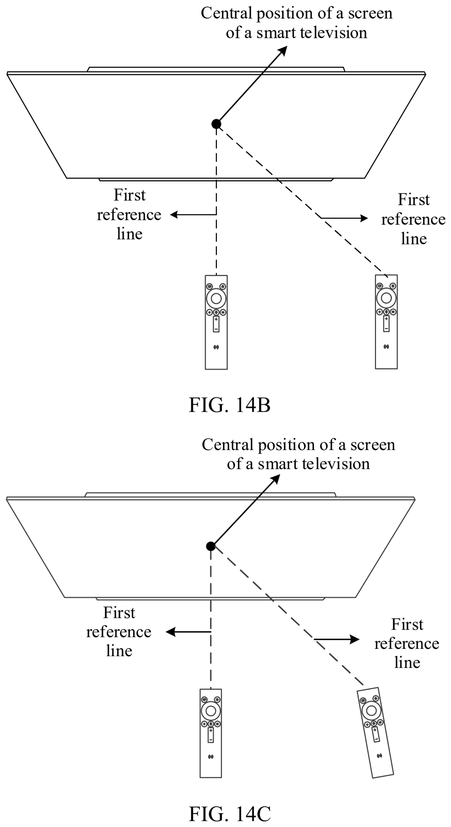

As shown in FIG. 14A, when the position of the remote control device does not change and the pointing direction of the remote control device changes, the first reference line does not change, and the first reference line is not affected by the pointing direction of the remote control device. As shown in FIG. 14B, when the position of the remote control device changes and the pointing direction of the remote control device does not change, the first reference line changes with the position of the remote control device. As shown in FIG. 14C, when the position of the remote control device changes and the pointing direction of the remote control device changes, the first reference line changes with the position of the remote control device, and is not affected by the pointing direction of the remote control device.

The first reference line and the pointing direction of the remote control device may have the following plurality of possible relationships. The following uses an example in which the screen device is the screen of the smart television for description.

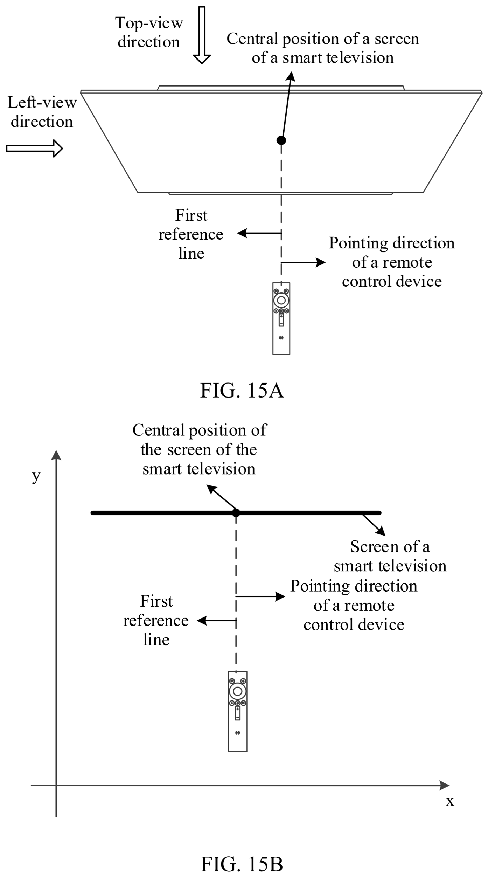

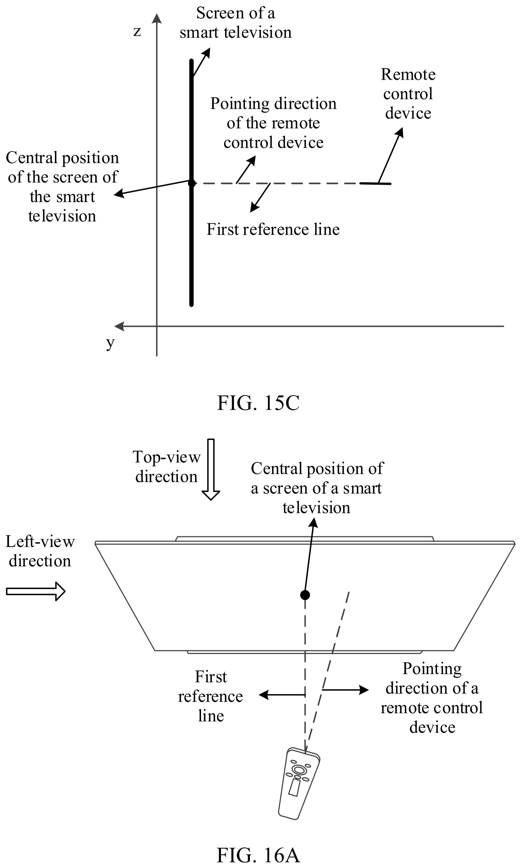

In a scenario shown in FIG. 15A, an example in which the position of the remote control device is in front of the central position of the screen of the smart television, and the pointing direction of the remote control device is perpendicular to the screen of the smart television is used for description. FIG. 15B is a top view corresponding to FIG. 15A, and FIG. 15C is a left view corresponding to FIG. 15A. With reference to FIG. 15B and FIG. 15C, it can be learned that the pointing direction of the remote control device coincides with the first reference line.

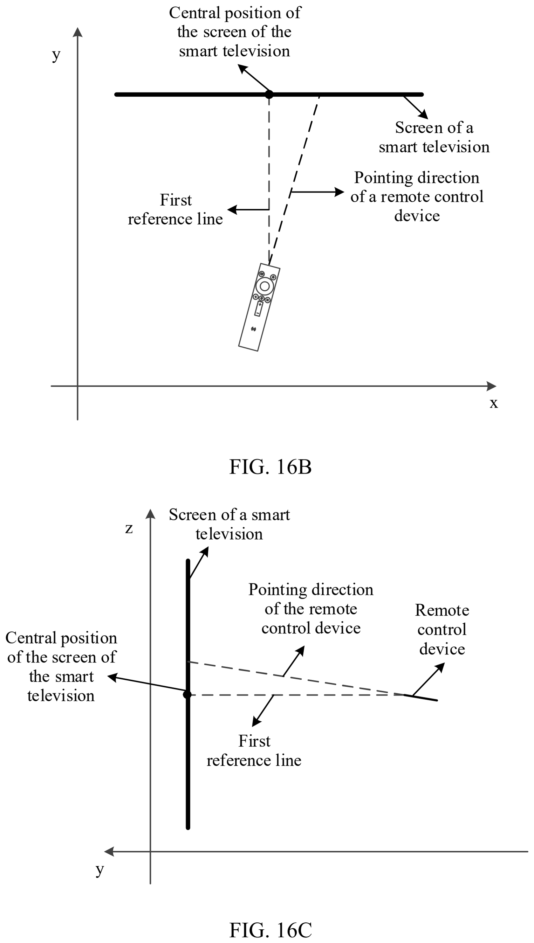

In a scenario shown in FIG. 16A, an example in which the position of the remote control device is in front of the central position of the screen of the smart television, and the pointing direction of the remote control device is not perpendicular to the screen of the smart television is used for description. FIG. 16B is a top view corresponding to FIG. 16A, and FIG. 16C is a left view corresponding to FIG. 16A. With reference to FIG. 16B and FIG. 16C, it can be learned that the pointing direction of the remote control device does not coincide with the first reference line.

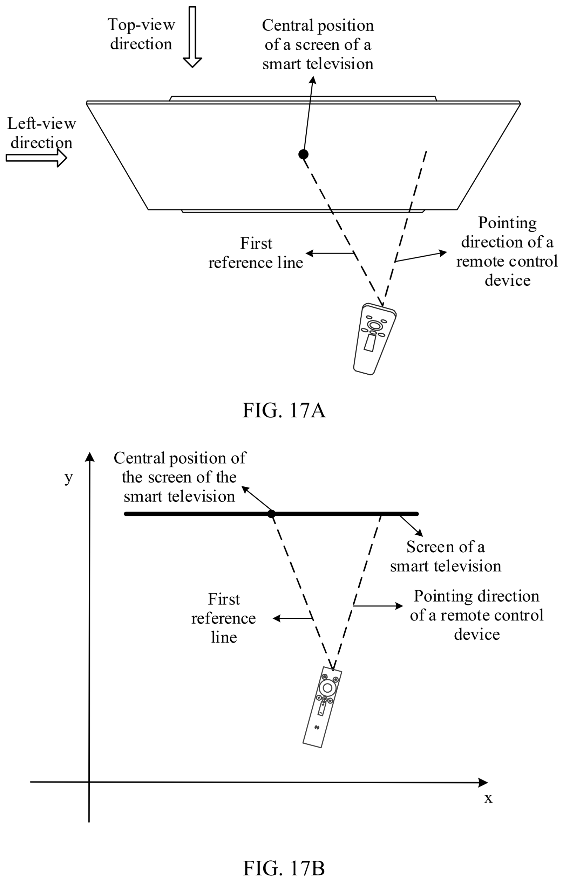

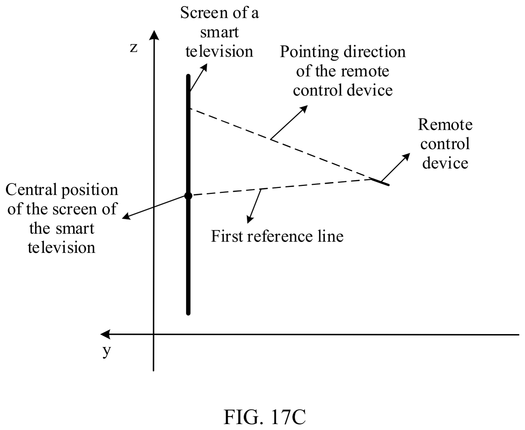

In a scenario shown in FIG. 17A, an example in which the position of the remote control device is not in front of the central position of the screen of the smart television, and the pointing direction of the remote control device is not perpendicular to the screen of the smart television is used for description. FIG. 17B is a top view corresponding to FIG. 17A, and FIG. 17C is a left view corresponding to FIG. 17A. With reference to FIG. 17B and FIG. 17C, it can be learned that the pointing direction of the remote control device does not coincide with the first reference line.

In this embodiment of this application, that the remote control device determines the first deflection angle of the pointing direction of the remote control device relative to the first reference line may include the following two possible implementations.

In a first possible implementation, that the remote control device determines the first deflection angle of the pointing direction of the remote control device relative to the first reference line may include the following steps.

In a possible implementation, an included angle between the pointing direction of the remote control device and a first reference plane is used as a first horizontal deflection angle. The first reference plane is a plane that is perpendicular to the horizontal plane and that includes the first reference line. An included angle between the pointing direction of the remote control device and a second reference plane is used as a first vertical deflection angle. The second reference plane is a plane that is parallel to the horizontal plane and that includes the first reference line. Finally, the obtained first horizontal deflection angle and first vertical deflection angle are used as the first deflection angle.

It should be understood that for a method for calculating the included angle between the pointing direction of the remote control device and the first reference plane or the included angle between the pointing direction of the remote control device and the second reference plane, refer to a method for calculating an included angle between a straight line and a plane in geometry. Details are not described herein.

In the scenario shown in FIG. 15A, an example in which the position of the remote control device is in front of the central position of the screen of the smart television, and the pointing direction of the remote control device is perpendicular to the screen of the smart television is used for description. FIG. 15B is a top view corresponding to FIG. 15A, and FIG. 15C is a left view corresponding to FIG. 15A. With reference to FIG. 15B and FIG. 15C, it can be learned that the pointing direction of the remote control device coincides with the first reference line. When the pointing direction of the remote control device coincides with the first reference line, it can be learned that both the first horizontal deflection angle and the first vertical deflection angle are 0.

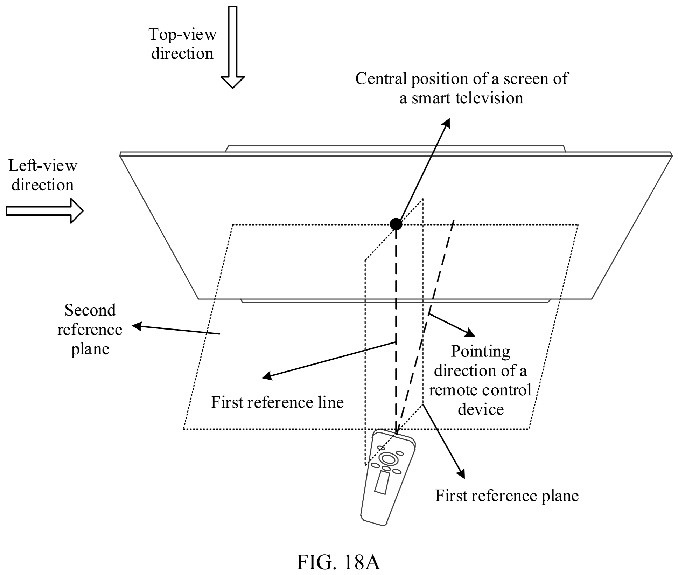

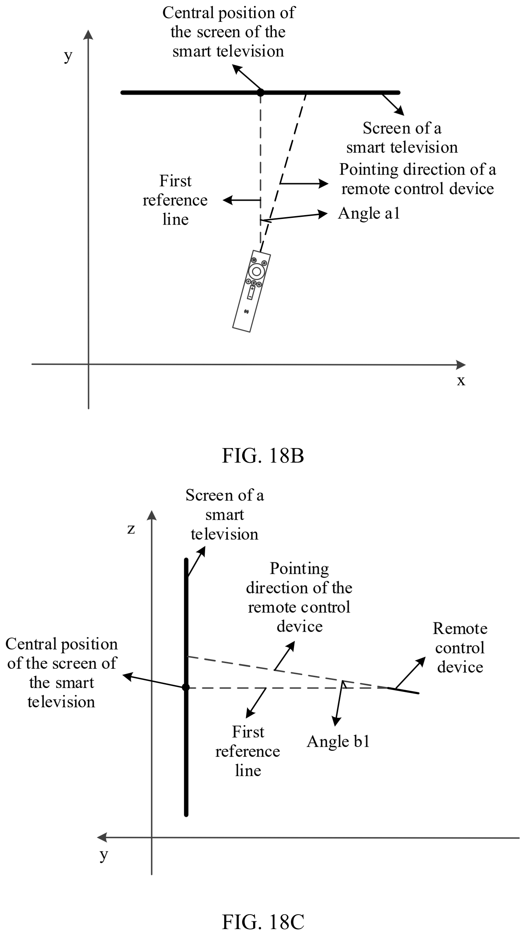

In a scenario shown in FIG. 18A, an example in which the position of the remote control device is in front of the central position of the screen of the smart television, and the pointing direction of the remote control device is not perpendicular to the screen of the smart television is used for description. FIG. 18B is a top view corresponding to FIG. 18A, and FIG. 18C is a left view corresponding to FIG. 18A. With reference to FIG. 18B and FIG. 18C, it can be learned that the first reference plane is the plane that is perpendicular to the horizontal plane and that includes the first reference line, and the second reference plane is the plane that is parallel to the horizontal plane and that includes the first reference line. The included angle between the pointing direction of the remote control device and the first reference plane is an angle a1. Therefore, the first horizontal deflection angle is a1. The included angle between the pointing direction of the remote control device and the second reference plane is an angle b1. Therefore, the first vertical deflection angle is b1.

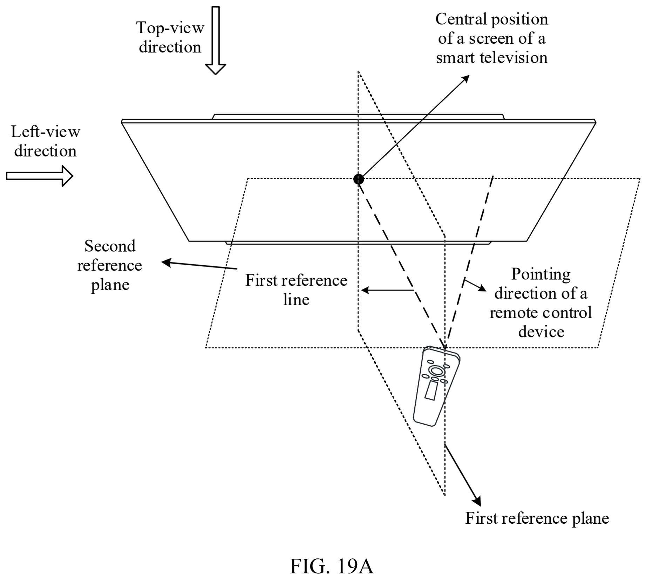

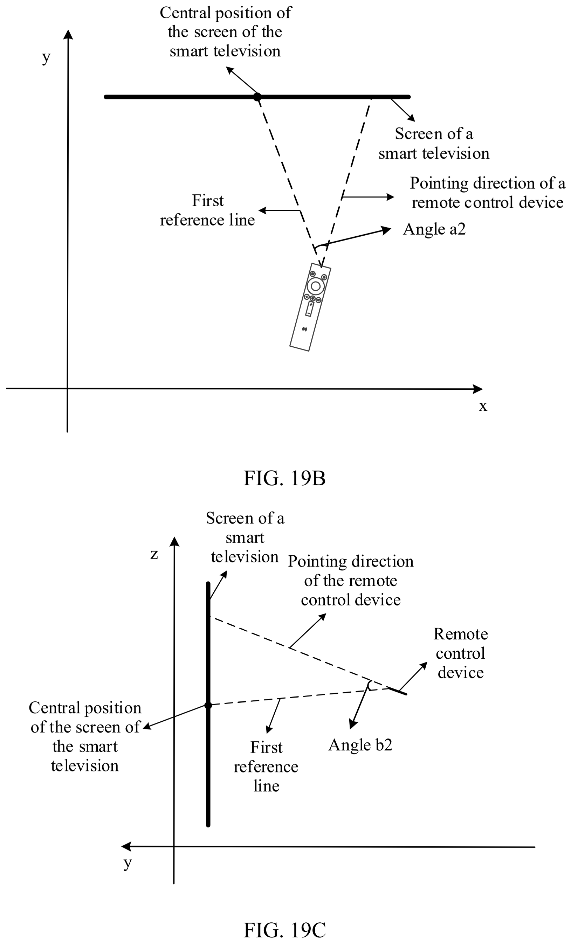

In a scenario shown in FIG. 19A, an example in which the position of the remote control device is not in front of the central position of the screen of the smart television, and the pointing direction of the remote control device is not perpendicular to the screen of the smart television is used for description. FIG. 19B is a top view corresponding to FIG. 19A, and FIG. 19C is a left view corresponding to FIG. 19A. With reference to FIG. 19B and FIG. 19C, it can be learned that the first reference plane is the plane that is perpendicular to the horizontal plane and that includes the first reference line, and the second reference plane is the plane that is parallel to the horizontal plane and that includes the first reference line. The included angle between the pointing direction of the remote control device and the first reference plane is an angle a2. Therefore, the first horizontal deflection angle is a2. The included angle between the pointing direction of the remote control device and the second reference plane is an angle b2. Therefore, the first vertical deflection angle is b2.

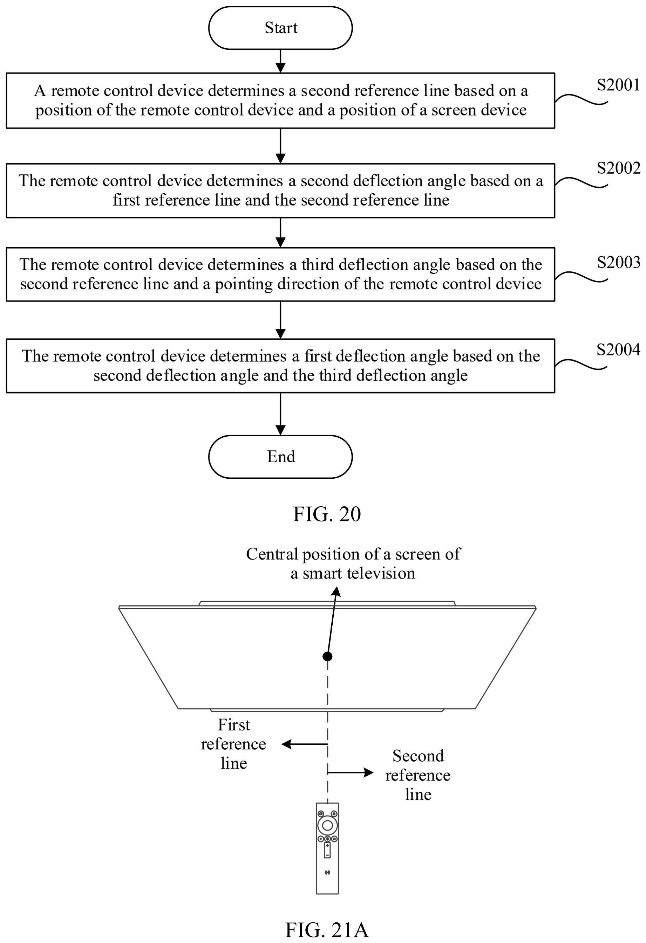

In a second possible implementation, that the remote control device determines the first deflection angle of the pointing direction of the remote control device relative to the first reference line may include the following steps shown in FIG. 20.

S2001: The remote control device determines a second reference line based on the position of the remote control device and a position of the screen device.

In this embodiment of this application, a straight line perpendicular to the screen device is determined by using the position of the remote control device as a start point. An intersection point between the straight line and the screen device is used as an end point, and a connection line between the start point and the end point is used as the second reference line. Therefore, when the screen device is fixed, the second reference line changes with the position of the remote control device.

The following uses an example in which the screen device is the screen of the smart television for description.

For example, as shown in FIG. 21A, the position of the remote control device is in front of the central position of the screen of the smart television, and the determined second reference line coincides with the first reference line.

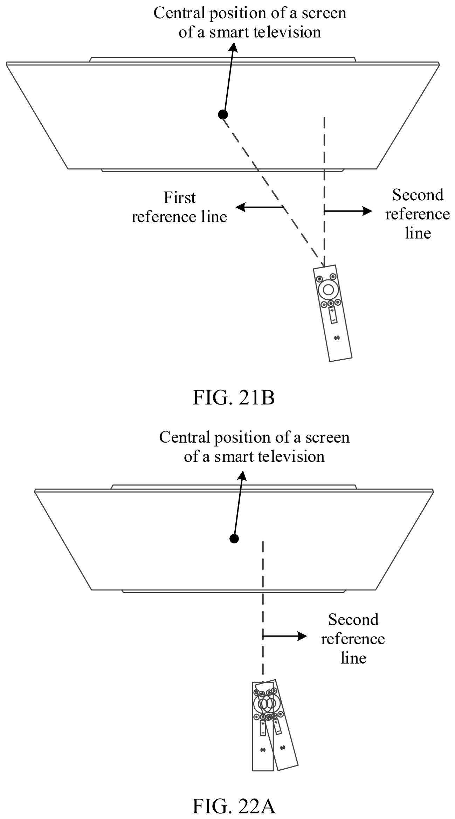

For example, as shown in FIG. 21B, the position of the remote control device is not in front of the central position of the screen of the smart television, and the determined second reference line does not coincide with the first reference line.

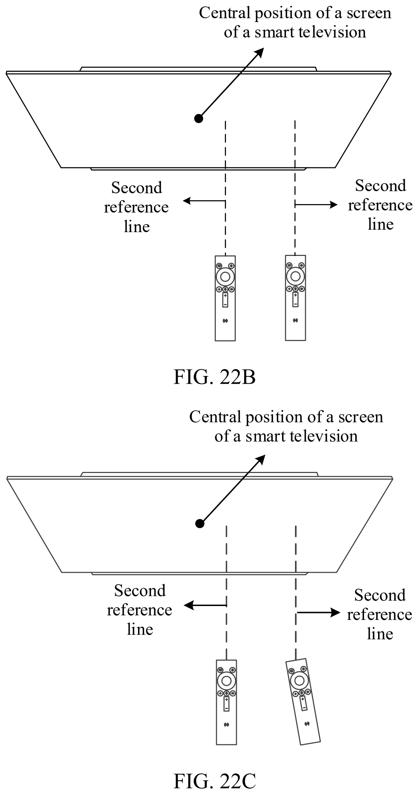

In addition, the second reference line is not affected by the pointing direction of the remote control device. The following uses an example in which the screen device is the screen of the smart television for description. As shown in FIG. 22A, when the position of the remote control device does not change and the pointing direction of the remote control device changes, the second reference line does not change, and the second reference line is not affected by the pointing direction of the remote control device. As shown in FIG. 22B, when the position of the remote control device changes and the pointing direction of the remote control device does not change, the second reference line changes with the position of the remote control device. As shown in FIG. 22C, when the position of the remote control device changes and the pointing direction of the remote control device changes, the second reference line changes with the position of the remote control device, and is not affected by the pointing direction of the remote control device.

S2002: The remote control device determines a second deflection angle based on the first reference line and the second reference line.

In this embodiment of this application, the second deflection angle includes a second horizontal deflection angle and/or a second vertical deflection angle.

In this embodiment of this application, determining the second horizontal deflection angle and the second vertical deflection angle may include the following two possible implementations.

In a possible implementation, an included angle between the second reference line and a third reference plane is used as the second horizontal deflection angle. The third reference plane is a plane that is perpendicular to the horizontal plane and that includes the first reference line. An included angle between the second reference line and a fourth reference plane is used as the second vertical deflection angle. The fourth reference plane is a plane that is parallel to the horizontal plane and that includes the first reference line. Finally, the obtained second horizontal deflection angle and second vertical deflection angle are used as the second deflection angle.

It should be understood that, for a method for calculating the included angle between the second reference line and the third reference plane or the included angle between the second reference line and the fourth reference plane, refer to a method for calculating an included angle between a straight line and a plane in geometry. Details are not described herein.

In another possible implementation, a length of the second reference line is used as a first distance. The first distance is a distance between the position of the remote control device and the central position of the screen device in a y-axis direction. A distance between the end point of the second reference line and the central position of the screen device in an x-axis direction is used as a second distance. The second distance is a distance between the position of the remote control device and the central position of the screen device in the x-axis direction. A distance between the end point of the second reference line and the central position of the screen device in a z-axis direction is used as a third distance. The third distance is a distance between the position of the remote control device and the central position of the screen device in the z-axis direction.

After the first distance, the second distance, and the third distance are determined, the second horizontal deflection angle and the second vertical deflection angle may be determined based on an arctangent function, where second horizontal deflection angle=arctan(second distance/first distance), and second vertical deflection angle=arctan(third distance/first distance), where / is a semicolon.

The second horizontal deflection angle is shown in formula (1):

$$\Delta\alpha\_\text{horizontal} = \frac{distance\_x}{distance\_y} \tag{1}$$

Herein, $\Delta\alpha\_$horizontal represents the second horizontal deflection angle, *distance_x* represents the second distance, and *distance_y* represents the first distance.

The second vertical deflection angle is shown in formula (2):

$$\Delta\alpha\_\text{vertical} = \frac{distance\_z}{distance\_y} \tag{2}$$

Herein, $\Delta\alpha\_$vertical represents the second vertical deflection angle, *distance_z* represents the third distance, and *distance_y* represents the first distance.

The following uses an example in which the screen device is the screen of the smart television for description.

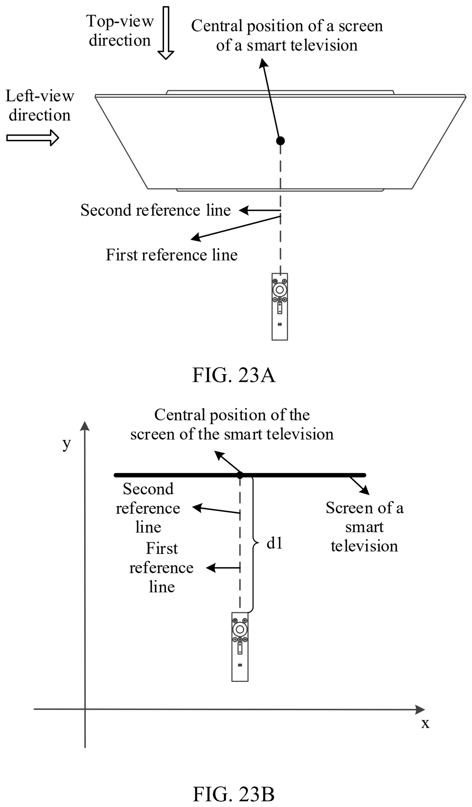

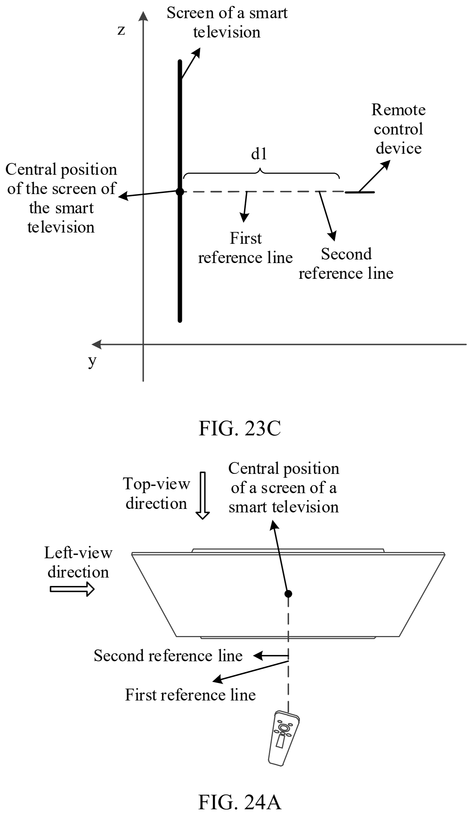

In a scenario shown in FIG. 23A, an example in which the position of the remote control device is in front of the central position of the screen of the smart television, and the pointing direction of the remote control device is perpendicular to the screen of the smart television is used for description. FIG. 23B is a top view corresponding to FIG. 23A, and FIG. 23C is a left view corresponding to FIG. 23A. With reference to FIG. 23B and FIG. 23C, it can be learned that the first reference line coincides with the second reference line. Therefore, the determined first distance is d1, and both the second distance and the third distance are 0. On the basis of the arctangent function, second horizontal deflection angle=arctan (0/d1)=0, and second vertical deflection angle=arctan(0/d1)=0.

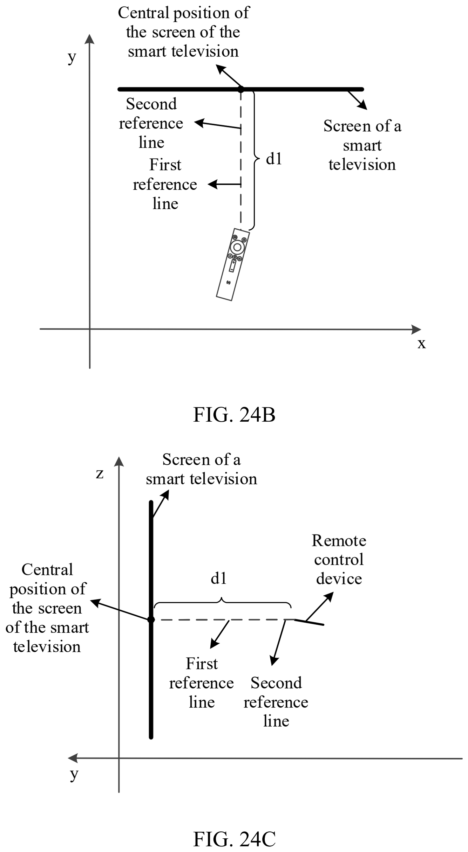

In a scenario shown in FIG. 24A, an example in which the position of the remote control device is in front of the central position of the screen of the smart television, and the pointing direction of the remote control device is not perpendicular to the screen of the smart television is used for description. FIG. 24B is a top view corresponding to FIG. 24A, and FIG. 24C is a left view corresponding to FIG. 24A. With reference to FIG. 24B and FIG. 24C, it can be learned that the first reference line coincides with the second reference line. Therefore, the determined first distance is d1, and both the second distance and the third distance are 0. On the basis of the arctangent function, second horizontal deflection angle=arctan (0/d1)=0, and second vertical deflection angle=arctan(0/d1)=0.

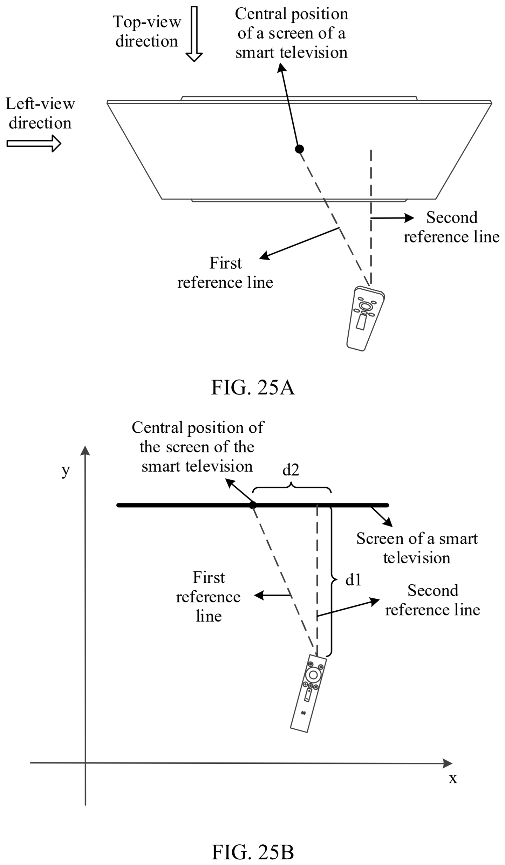

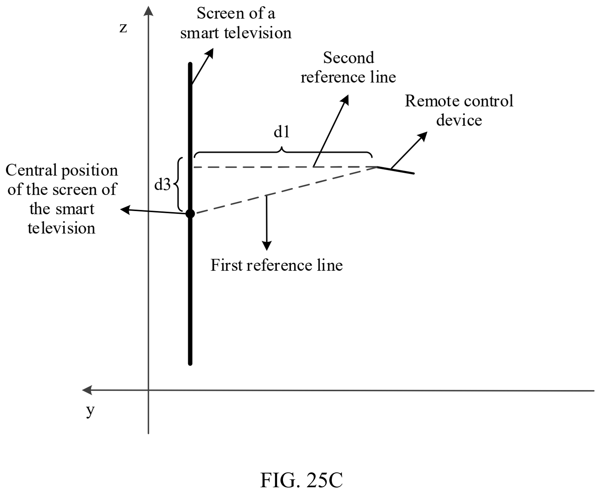

In a scenario shown in FIG. 25A, an example in which the position of the remote control device is not in front of the central position of the screen of the smart television, and the pointing direction of the remote control device is not perpendicular to the screen of the smart television is used for description. FIG. 25B is a top view corresponding to FIG. 25A, and FIG. 25C is a left view corresponding to FIG. 25A. With reference to FIG. 25B and FIG. 25C, it can be learned that the first reference line does not coincide with the second reference line. Therefore, the determined first distance is d1, the second distance is d2, and the third distance is d3. On the basis of the arctangent function, second horizontal deflection angle=arctan(d2/d1), and second vertical deflection angle=arctan(d3/d1).

S2003: The remote control device determines a third deflection angle based on the second reference line and the pointing direction of the remote control device.

In this embodiment of this application, the third deflection angle includes a third horizontal deflection angle and/or a third vertical deflection angle.

In a possible implementation, an included angle between the pointing direction of the remote control device and a fifth reference plane is used as the third horizontal deflection angle. The fifth reference plane is a plane that is perpendicular to the horizontal plane and that includes the first reference line. An included angle between the pointing direction of the remote control device and a sixth reference plane is used as the third vertical deflection angle. The sixth reference plane is a plane that is parallel to the horizontal plane and that includes the first reference line. Finally, the obtained third horizontal deflection angle and third vertical deflection angle are used as the third deflection angle.

It should be understood that for a method for calculating the included angle between the pointing direction of the remote control device and the fifth reference plane or the included angle between the pointing direction of the remote control device and the sixth reference plane, refer to a method for calculating an included angle between a straight line and a plane in geometry. Details are not described herein.

S2004: The remote control device determines the first deflection angle based on the second deflection angle and the third deflection angle.

In this embodiment of this application, if the pointing direction of the remote control device is not between the first reference line and the second reference line, a sum of the second horizontal deflection angle and the third horizontal deflection angle is the first horizontal deflection angle, and a sum of the second vertical deflection angle and the third vertical deflection angle is the first vertical deflection angle.

If the pointing direction of the remote control device is between the first reference line and the second reference line, a difference between the second horizontal deflection angle and the third horizontal deflection angle is the first horizontal deflection angle, and a difference between the second vertical deflection angle and the third vertical deflection angle is the first vertical deflection angle.

Finally, the obtained first horizontal deflection angle and first vertical deflection angle are used as the first deflection angle.

The following uses an example in which the screen device is the screen of the smart television for description.

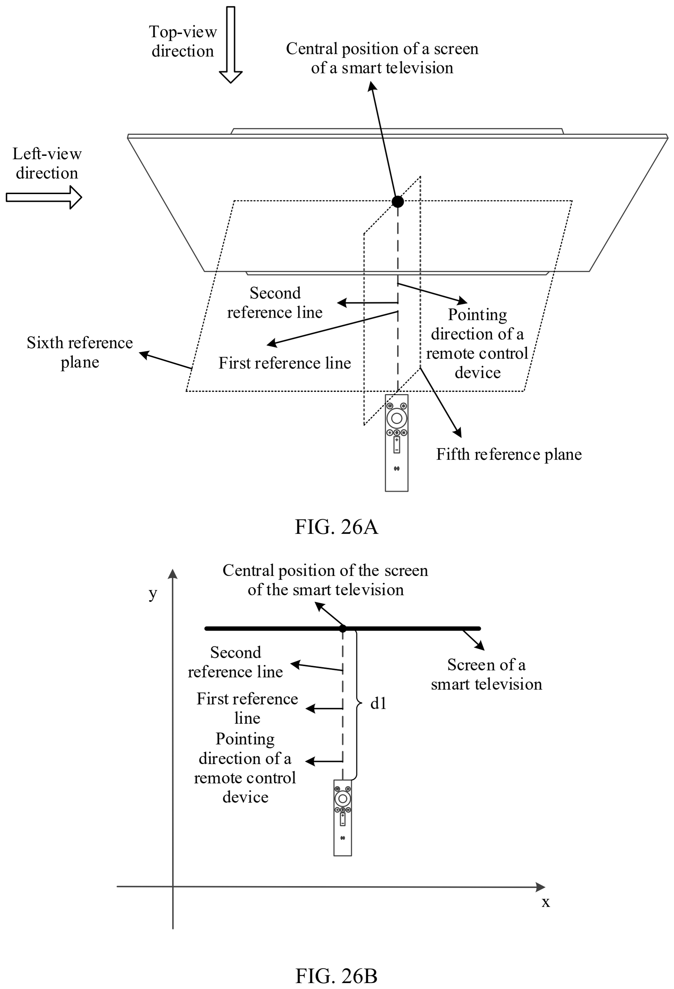

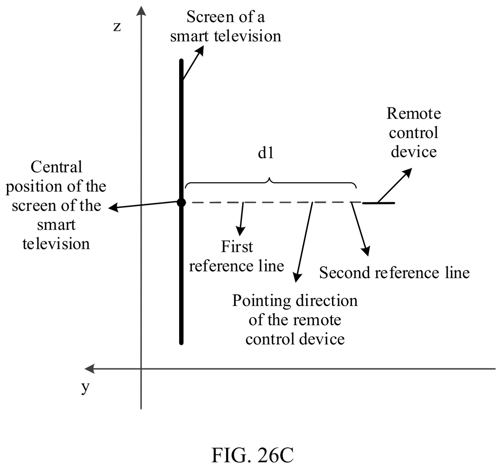

In a scenario shown in FIG. 26A, an example in which the position of the remote control device is in front of the central position of the screen of the smart television, and the pointing direction of the remote control device is perpendicular to the screen of the smart television is used for description. FIG. 26B is a top view corresponding to FIG. 26A, and FIG. 26C is a left view corresponding to FIG. 26A. With reference to FIG. 26B and FIG. 26C, it can be learned that the first reference line coincides with the second reference line. Therefore, the determined first distance is d1, and both the second distance and the third distance are 0. On the basis of the arctangent function, second horizontal deflection angle=arctan (0/d1)=0, and second vertical deflection angle=arctan(0/d1)=0. The third horizontal deflection angle may be determined based on the pointing direction of the remote control device and the fifth reference plane, and the third horizontal deflection angle is 0. The third vertical deflection angle may be determined based on the pointing direction of the remote control device and the sixth reference plane, and the third vertical deflection angle is 0. Therefore, the first horizontal deflection angle is 0, and the first vertical deflection angle is 0.

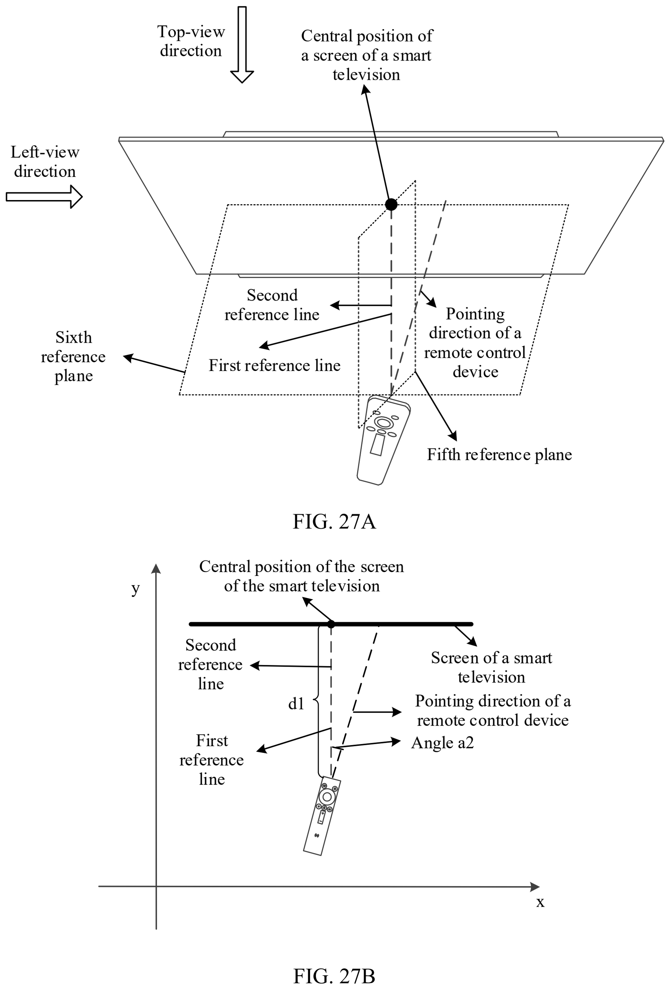

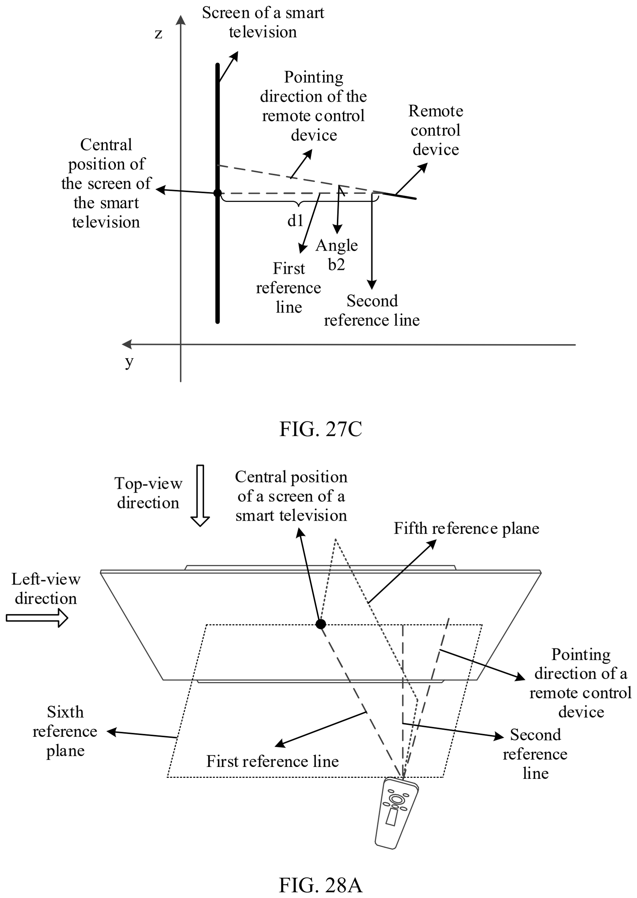

In a scenario shown in FIG. 27A, an example in which the position of the remote control device is in front of the central position of the screen of the smart television, and the pointing direction of the remote control device is not perpendicular to the screen of the smart television is used for description. FIG. 27B is a top view corresponding to FIG. 27A, and FIG. 27C is a left view corresponding to FIG. 27A. With reference to FIG. 27B and FIG. 27C, it can be learned that the first reference line coincides with the second reference line. Therefore, the determined first distance is d1, and both the second distance and the third distance are 0. On the basis of the arctangent function, second horizontal deflection angle=arctan (0/d1)=0, and second vertical deflection angle=arctan(0/d1)=0. The third horizontal deflection angle may be determined based on the pointing direction of the remote control device and the fifth reference plane, and the third horizontal deflection angle is an angle a2. The third vertical deflection angle may be determined based on the pointing direction of the remote control device and the sixth reference plane, and the third vertical deflection angle is an angle b2. Therefore, the first horizontal deflection angle is a2, and the first vertical deflection angle is b2.

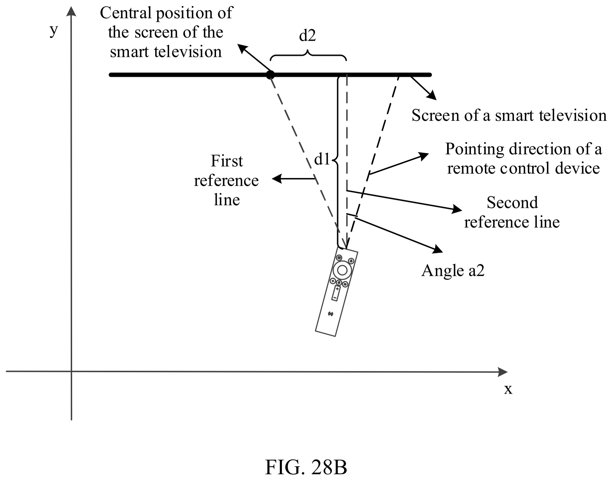

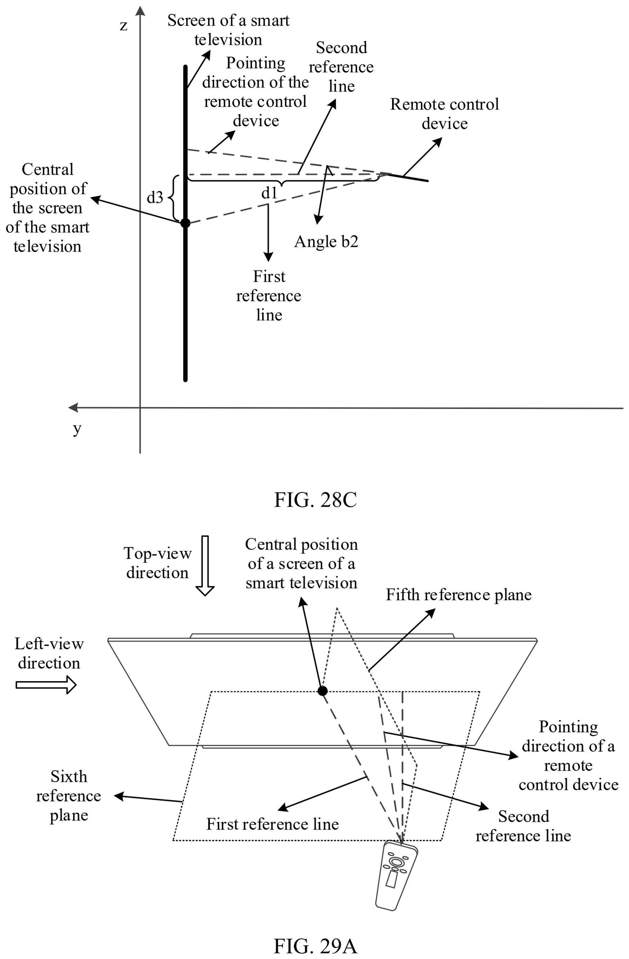

In a scenario shown in FIG. 28A, an example in which the position of the remote control device is in front of a non-central position of the screen of the smart television, and a placement direction of the remote control device is not perpendicular to the screen of the smart television is used for description. FIG. 28B is a top view corresponding to FIG. 28A, and FIG. 28C is a left view corresponding to FIG. 28A. With reference to FIG. 28B and FIG. 28C, it can be learned that the first reference line does not coincide with the second reference line. Therefore, the determined first distance is d1, the second distance is d2, and the third distance is d3. On the basis of the arctangent function, second horizontal deflection angle=arctan(d2/d1), and second vertical deflection angle=arctan(d3/d1). The third horizontal deflection angle may be determined based on the pointing direction of the remote control device and the fifth reference plane, and the third horizontal deflection angle is an angle a2. The third vertical deflection angle may be determined based on the pointing direction of the remote control device and the sixth reference plane, and the third vertical deflection angle is an angle b2. Because the pointing direction of the remote control device is not between the first reference line and the second reference line, the first horizontal deflection angle is (arctan(d2/d1)+a2), and the first vertical deflection angle is (arctan(d3/d1)+b2).

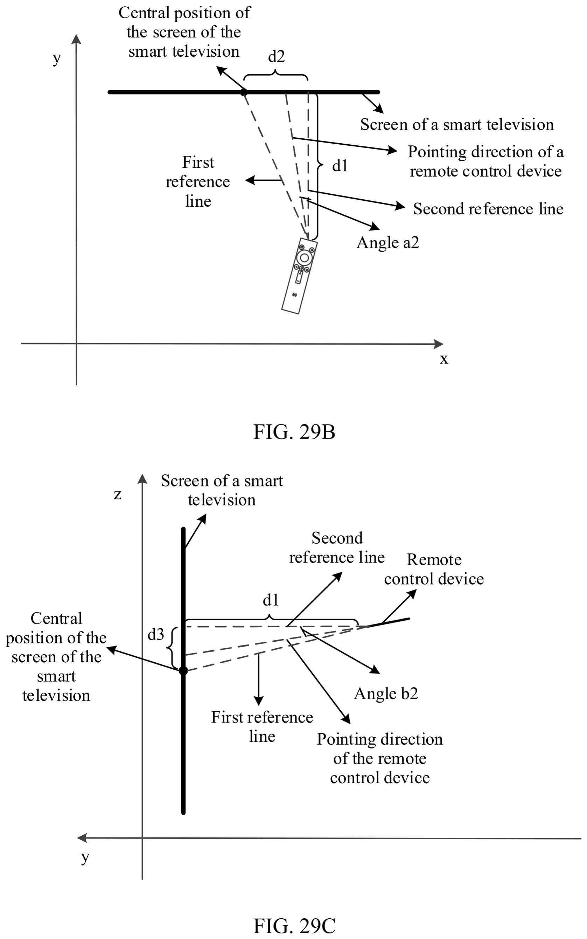

In a scenario shown in FIG. 29A, an example in which the position of the remote control device is in front of a non-central position of the screen of the smart television, and a placement direction of the remote control device is not perpendicular to the screen of the smart television is used for description. FIG. 29B is a top view corresponding to FIG. 29A, and FIG. 29C is a left view corresponding to FIG. 29A. With reference to FIG. 29B and FIG. 29C, it can be learned that the first reference line does not coincide with the second reference line. Therefore, the determined first distance is d1, the second distance is d2, and the third distance is d3. On the basis of the arctangent function, second horizontal deflection angle=arctan(d2/d1), and second vertical deflection angle=arctan(d3/d1). The third horizontal deflection angle may be determined based on the pointing direction of the remote control device and the fifth reference plane, and the third horizontal deflection angle is an angle a2. The third vertical deflection angle may be determined based on the pointing direction of the remote control device and the sixth reference plane, and the third vertical deflection angle is an angle b2. Because the pointing direction of the remote control device is between the first reference line and the second reference line, the first horizontal deflection angle is arctan (d2/d1)-a2, and the first vertical deflection angle is arctan (d3/d1)-b2.

In this embodiment of this application, both the first horizontal deflection angle and the first vertical deflection angle determined in the foregoing implementation are expressed in degrees. To facilitate subsequent calculation, the first horizontal deflection angle and the first vertical deflection angle may be changed, by using a correspondence between degrees and radians, to be expressed in radians. The correspondence between degrees and radians is: 1 degree=$\pi$/180 radian, where / is a semicolon.

S502: The remote control device determines a first offset distance based on the first deflection angle and a first virtual arc surface, and determines, based on the central position of the screen device and the first offset distance, a cursor position that is of a cursor corresponding to the remote control device and that is on the screen device.

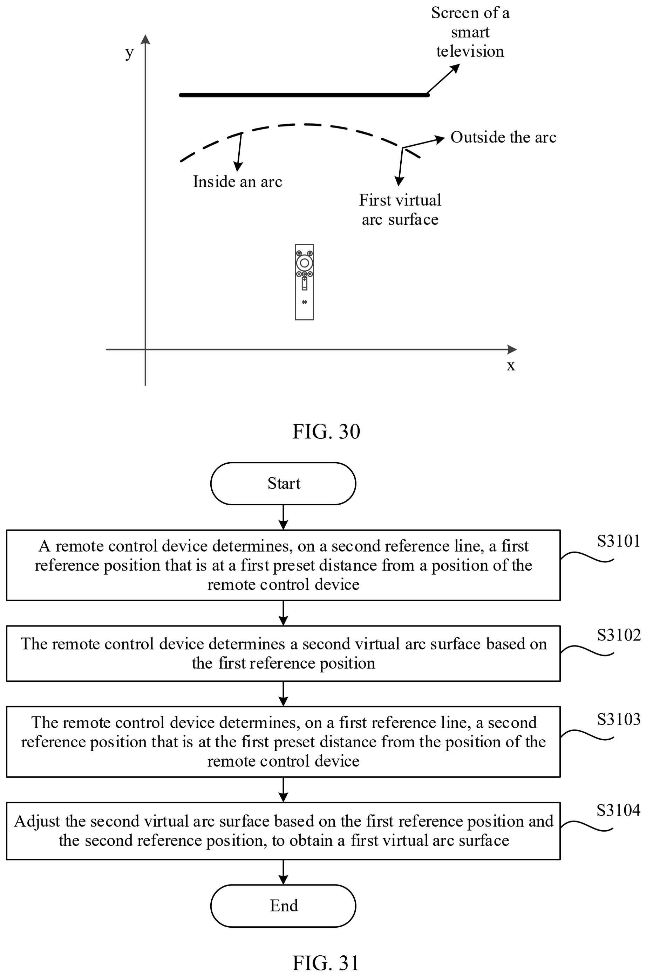

In this embodiment of this application, as shown in a top view in FIG. 30, the first virtual arc surface is located between the remote control device and the screen device, the remote control device is located inside an arc of the first virtual arc surface, and the screen device is located outside the arc of the first virtual arc surface. A radius of the first virtual arc surface is a fixed value, and a radius length of the first virtual arc surface is a first length. When the position of the remote control device or the pointing direction of the remote control device changes, the radius of the first virtual arc surface remains unchanged. An arc length of the first virtual arc surface is a fixed value. When the position of the remote control device or the pointing direction of the remote control device changes, the arc length of the first virtual arc surface remains unchanged.

A central position of the first virtual arc surface is on the first reference line, and a tangent at the central position of the first virtual arc surface is perpendicular to the first reference line.

When the position of the remote control device changes, the first reference line changes with the position of the remote control device, and the first virtual arc surface also changes with the first reference line. The first virtual arc surface may be considered as being formed by a plurality of points. Before and after the first virtual arc surface changes, a relative distance between any point on the first virtual arc surface and the position of the remote control device remains unchanged.

In a possible implementation, that the remote control device determines the first virtual arc surface may include the following possible steps shown in FIG. 31.

S3101: The remote control device determines, on a second reference line, a first reference position that is at a first preset distance from the position of the remote control device.

In this embodiment of this application, a y-axis coordinate of the first reference position is located between a y-axis coordinate of the remote control device and a y-axis coordinate of the screen.

S3102: The remote control device determines a second virtual arc surface based on the first reference position.

In this embodiment of this application, a central position of the second virtual arc surface coincides with the first reference position, and a tangent at the central position of the second virtual arc surface is perpendicular to the second reference line.

S3103: The remote control device determines, on the first reference line, a second reference position that is at the first preset distance from the position of the remote control device.

S3104: The remote control device adjusts the second virtual arc surface based on the first reference position and the second reference position, to obtain the first virtual arc surface.

In some embodiments, the second horizontal deflection angle and the second vertical deflection angle are determined above. To be specific, the second horizontal deflection angle $\Delta\alpha\_horizontal = \frac{distance\_x}{distance\_y}$, and the second vertical deflection angle $\Delta\alpha\_vertical = \frac{distance\_z}{distance\_y}$. Details are not described herein.

The second virtual arc surface rotates by the second horizontal deflection angle in the horizontal direction and rotates by the second vertical deflection angle in the vertical direction, to obtain the first virtual arc surface. The central position of the first virtual arc surface coincides with the second reference position, and the tangent at the central position of the first virtual arc surface is perpendicular to the first reference line. The radius length of the first virtual arc surface is equal to a radius length of the second virtual arc surface. The arc length of the first virtual arc surface is equal to an arc length of the second virtual arc surface.

The following uses an example in which the screen device is the screen of the smart television for description.

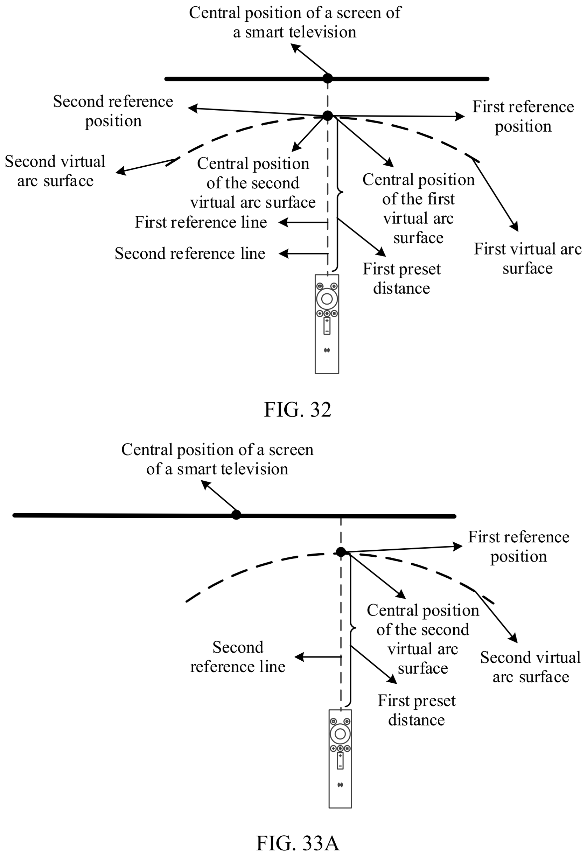

In a scenario shown in FIG. 32, an example in which the remote control device is located in front of the central position of the screen of the smart television, and the pointing direction of the remote control device is perpendicular to the screen of the smart television is used for description. In this scenario, the first reference line coincides with the second reference line. The remote control device determines, on the second reference line, the first reference position that is at the first preset distance from the position of the remote control device. The remote control device determines the second virtual arc surface based on the first reference position. The central position of the second virtual arc surface coincides with the first reference position, and the tangent at the central position of the second virtual arc surface is perpendicular to the second reference line.

The remote control device determines, on the first reference line, the second reference position that is at the first preset distance from the position of the remote control device. Because the first reference line coincides with the second reference line, the determined second reference position coincides with the determined first reference position. The second virtual arc surface is adjusted based on the first reference position and the second reference position, and the obtained first virtual arc surface coincides with the obtained second virtual arc surface.

When the remote control device is located in front of the central position of the screen of the smart television, and the pointing direction of the remote control device is not perpendicular to the screen of the smart television, the determined first virtual arc surface is shown in FIG. 32. Details are not described herein.

In scenarios shown in FIG. 33A to FIG. 33C, an example in which the position of the remote control device is in front of the non-central position of the screen of the smart television, and the pointing direction of the remote control device is perpendicular to the screen of the smart television is used for description. In this scenario, the first reference line does not coincide with the second reference line. As shown in FIG. 33A, the remote control device determines, on the second reference line, the first reference position that is at the first preset distance from the position of the remote control device. The remote control device determines the second virtual arc surface based on the first reference position. The central position of the second virtual arc surface coincides with the first reference position, and the tangent at the central position of the second virtual arc surface is perpendicular to the second reference line.

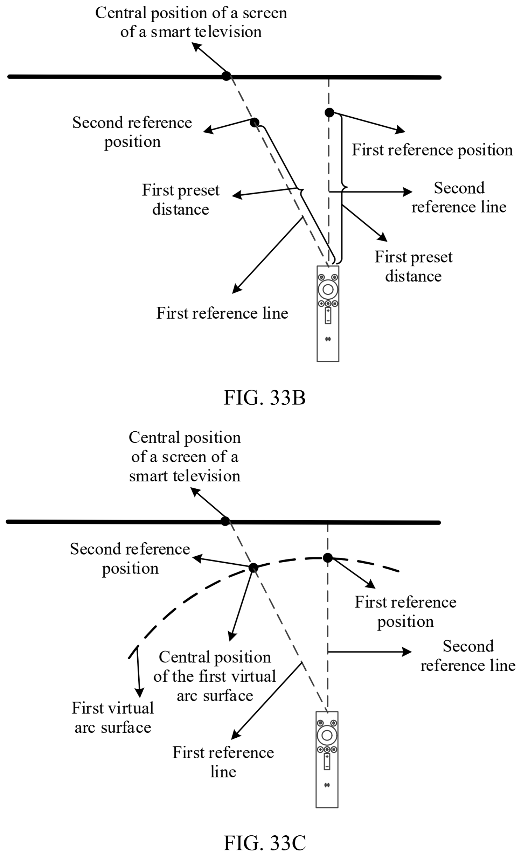

As shown in FIG. 33B, the remote control device determines, on the first reference line, the second reference position that is at the first preset distance from the position of the remote control device. As shown in FIG. 33C, the second virtual arc surface is adjusted based on the first reference position and the second reference position, to obtain the first virtual arc surface.

In this embodiment of this application, the first offset distance includes a first horizontal offset distance and a first vertical offset distance.

Determining the first horizontal offset distance and the first vertical offset distance based on the first horizontal deflection angle and the first vertical deflection angle may include the following three possible implementations.

In a first possible implementation, a product of the radius length of the first virtual arc surface and the first horizontal deflection angle is used as a second horizontal offset distance, and a product of a first horizontal adjustment ratio and the second horizontal offset distance is used as the first horizontal offset distance. A product of the radius length of the first virtual arc surface and the first vertical deflection angle is used as a second vertical offset distance, and a product of a first vertical adjustment ratio and the second vertical offset distance is used as the first vertical offset distance. It should be understood that the first horizontal adjustment ratio and the first vertical adjustment ratio are preset values, and the first horizontal adjustment ratio and the first vertical adjustment ratio may be the same or may be different. The first horizontal adjustment ratio and the first vertical adjustment ratio may be set to decimals between 0 and 1, or may be set to numbers greater than 1.

The first horizontal offset distance is shown in formula (3):

$$\Delta d\_horizontal = k1\_horizontal * R * \Delta\alpha\_horizontal \qquad (3)$$

Herein, $\Delta d\_horizontal$ represents the first horizontal offset distance, $k1\_horizontal$ represents the first horizontal adjustment ratio, R represents the radius length of the first virtual arc surface, and $\Delta\alpha\_horizontal$ represents the first horizontal deflection angle.

The first vertical offset distance is shown in formula (4):

$$\Delta d\_vertical = k1\_vertical * R * \Delta\alpha\_vertical \qquad (4)$$

Herein, $\Delta d\_vertical$ represents the first vertical offset distance, $k1\_vertical$ represents the first vertical adjustment ratio, R represents the radius length of the first virtual arc surface, and $\Delta\alpha\_vertical$ represents the first vertical deflection angle.

In the foregoing possible implementation, the product of the radius length of the first virtual arc surface and the first horizontal deflection angle is a horizontal arc length corresponding to the first horizontal deflection angle, and a product of the horizontal arc length corresponding to the first horizontal deflection angle and the first horizontal adjustment ratio may be used as the first horizontal offset distance. The product of the radius length of the first virtual arc surface and the first vertical deflection angle is a vertical arc length corresponding to the first vertical deflection angle, and a product of the vertical arc length corresponding to the first vertical deflection angle and the first vertical adjustment ratio may be used as the first vertical offset distance.

In a second possible implementation, a product of the radius length of the first virtual arc surface and the first horizontal deflection angle is used as the first horizontal offset distance, and a product of the radius length of the first virtual arc surface and the first vertical deflection angle is used as the first vertical offset distance.

The first horizontal offset distance is shown in formula (5):

$$\Delta d\_horizontal = R * \Delta\alpha\_horizontal \qquad (5)$$

Herein, $\Delta d\_horizontal$ represents the first horizontal offset distance, R represents the radius length of the first virtual arc surface, and $\Delta\alpha\_horizontal$ represents the first horizontal deflection angle.

The first vertical offset distance is shown in formula (6):

$$\Delta d\_vertical = R * \Delta\alpha\_vertical \qquad (6)$$

Herein, $\Delta d\_vertical$ represents the first vertical offset distance, R represents the radius length of the first virtual arc surface, and $\Delta\alpha\_vertical$ represents the first vertical deflection angle.

In the foregoing possible implementation, the product of the radius length of the first virtual arc surface and the first horizontal deflection angle is a horizontal arc length corresponding to the first horizontal deflection angle, and the horizontal arc length corresponding to the first horizontal deflection angle may be directly used as the first horizontal offset distance. The product of the radius length of the first virtual arc surface and the first vertical deflection angle is a vertical arc length corresponding to the first vertical deflection angle, and the vertical arc length corresponding to the first vertical deflection angle may be directly used as the first vertical offset distance.

In a third possible implementation, a product of a first preset value and the first horizontal deflection angle is used as the first horizontal offset distance, and a product of a second preset value and the first vertical deflection angle is used as the first vertical offset distance. The first preset value and the second preset value may be the same or may be different.

The first horizontal offset distance is shown in formula (7):

$$\Delta d\_horizontal = K1 * \Delta\alpha\_horizontal \qquad (7)$$

Herein, $\Delta d\_horizontal$ represents the first horizontal offset distance, K1 represents the first preset value, and $\Delta\alpha\_horizontal$ represents the first horizontal deflection angle.

The first vertical offset distance is shown in formula (8):

$$\Delta d\_vertical = K2 * \Delta\alpha\_vertical \qquad (8)$$

Herein, $\Delta d\_vertical$ represents the first vertical offset distance, K2 represents the second preset value, and $\Delta\alpha\_vertical$ represents the first vertical deflection angle.

It should be understood that the first preset value and the second preset value may be the same or may be different. The first preset value and the second preset value may be set to decimals between 0 and 1, or may be set to numbers greater than 1.

In this embodiment of this application, after the first horizontal offset distance and the first vertical offset distance are determined, the cursor position may be determined in the following method: first, determining a first coordinate value of the cursor position in the x-axis direction based on the central position of the screen device and the first horizontal offset distance, and then, determining a second coordinate value of the cursor position in the z-axis direction based on the central position of the screen device and the first vertical offset distance. The first coordinate value and the second coordinate value form coordinates of the cursor position. The cursor position that is of the cursor corresponding to the remote control device and that is on the screen device may be determined based on the coordinates of the cursor position, and the cursor is displayed at the coordinates of the cursor position.

Generally, a sum of the central position of the screen device and the first horizontal offset distance is used as the first coordinate value of the cursor position in the x-axis direction, and a sum of the central position of the screen device and the first vertical offset distance is used as the second coordinate value of the cursor position in the z-axis direction.

The following uses an example in which the screen device is the screen of the smart television for description.

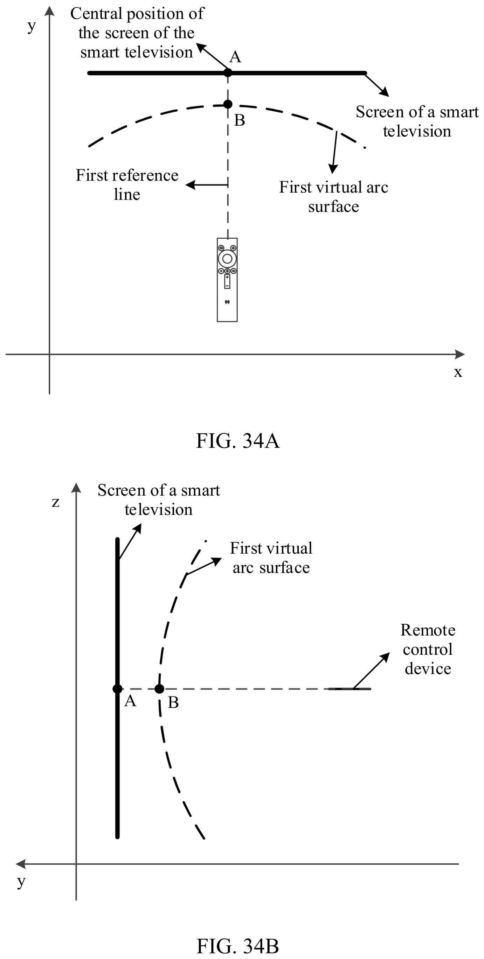

For example, as shown in a top view in FIG. 34A and a left view in FIG. 34B, the position of the remote control device is in front of the central position of the screen of the smart television, the pointing direction of the remote control device is perpendicular to the screen of the smart television, and the cursor corresponding to the remote control device is displayed at a point A on the screen of the smart television. The point A is the central position of the screen of the smart television.

The user deflects the remote control device. The first horizontal deflection angle of the remote control device is a1, the first vertical deflection angle of the remote control device is b1, and the radius length of the virtual arc surface is R.

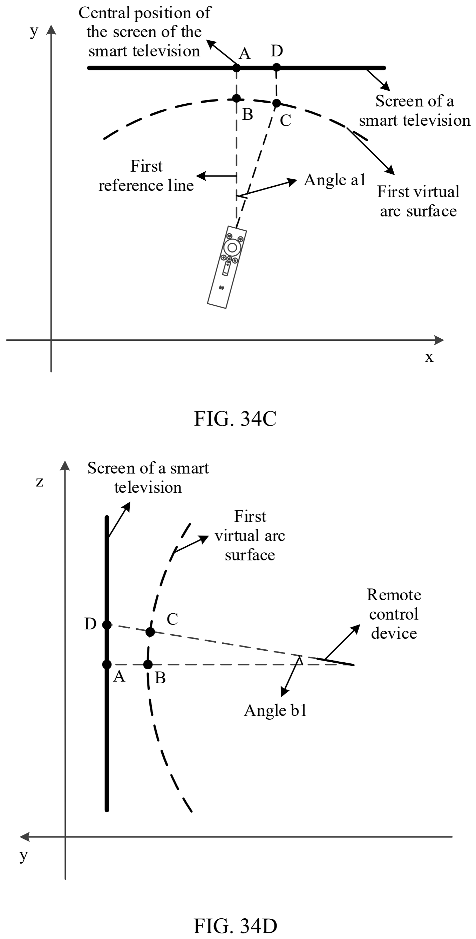

As shown in a top view in FIG. 34C, the product of the radius length R of the virtual arc surface and the first horizontal deflection angle a1 is a horizontal arc length between two points B and C. A product of the horizontal arc length between the two points B and C and the first horizontal adjustment ratio is used as the first horizontal offset distance. That is, the first coordinate value of the cursor position in the x-axis direction (namely, a coordinate value of a point D in the x-axis direction) may be determined based on the central position of the screen of the smart television (namely, a coordinate value of the point A in the x-axis direction) and the first horizontal offset distance.

As shown in a left view in FIG. 34D, the product of the radius length R of the virtual arc surface and the first vertical deflection angle b1 is a vertical arc length between the two points B and C. A product of the vertical arc length between the two points B and C and the first vertical adjustment ratio is used as the first vertical offset distance. That is, the second coordinate value of the cursor position in the z-axis direction (namely, a coordinate value of the point D in the z-axis direction) may be determined based on the central position of the screen of the smart television (namely, a coordinate value of the point A in the z-axis direction) and the first vertical offset distance.

Finally, the first coordinate value and the second coordinate value form the coordinates of the cursor position. The cursor position (namely, the point D) that is of the cursor corresponding to the remote control device and that is on the screen of the smart television is determined based on the coordinates of the cursor position, and the cursor is displayed at the coordinates of the cursor position.

In the foregoing embodiment, when the distance between the remote control device and the screen device varies or the pointing direction of the remote control device varies, if the remote control device is deflected by a same angle, a distance by which the cursor moves on the screen device is still the same, so that the user can accurately control movement accuracy of the cursor. In this way, user experience is improved.

When the pointing direction of the remote control device is deflected a plurality of times, the cursor position may be determined in two possible implementations. The following uses an example in which the pointing direction of the remote control device is deflected for an $N^{th}$ time for explanation and description, where N is greater than 1. When it is determined that the pointing direction of the remote control device is deflected for the $N^{th}$ time, the cursor position that is of the cursor corresponding to the remote control device and that is on the screen device is determined in the following two possible implementations.

In a first possible implementation, the cursor position may be determined by using steps shown in FIG. 5. Details are not described herein again.

In a second possible implementation, when the pointing direction of the remote control device is deflected for an $(N-1)^{th}$ time, the remote control device determines a cursor position corresponding to an $(N-1)^{th}$ deflection of the remote control device. The remote control device determines a relative offset distance of a pointing direction of the remote control device in an $N^{th}$ deflection relative to a pointing direction of the remote control device in the $(N-1)^{th}$ deflection. The remote control device determines, based on the cursor position corresponding to the $(N-1)^{th}$ deflection and the relative offset distance of the remote control device in the $N^{th}$ deflection, a cursor position corresponding to the $N^{th}$ deflection of the remote control device.

In a possible implementation, the relative offset distance includes a relative horizontal offset distance and a relative vertical offset distance. The remote control device first determines a seventh coordinate value of the cursor position in the x-axis direction based on the cursor position corresponding to the $(N-1)^{th}$ deflection and the relative horizontal offset distance, and then determines an eighth coordinate value of the cursor position in the z-axis direction based on the cursor position corresponding to the $(N-1)^{th}$ deflection and the relative vertical offset distance. The seventh coordinate value and the eighth coordinate value form coordinates of the cursor position corresponding to the $N^{th}$ deflection. The cursor position that is of the cursor corresponding to the remote control device, that is on the screen device, and that corresponds to the $N^{th}$ deflection may be determined based on the coordinates of the cursor position corresponding to the $N^{th}$ deflection, and the cursor is displayed at the coordinates of the cursor position.

To improve accuracy of the determined cursor position, an embodiment of this application further provides a cursor position determining method. A remote control device detects a third operation on a touchpad of the remote control device. In response to the third operation, the remote control device adjusts a radius length of a first virtual arc surface from a first length to a second length, where the second length is less than the first length.

When a user performs the third operation on the touchpad of the remote control device, the radius length of the first virtual arc surface is the second length. When the user does not perform the third operation on the touchpad of the remote control device, the radius length of the first virtual arc surface is restored to the first length. In this embodiment of this application, the third operation may be understood as pressing the touchpad of the remote control device, or the like. This is not limited herein. If the third operation is pressing the touchpad of the remote control device, when the user presses the touchpad of the remote control device, the radius length of the first virtual arc surface is the second length. When the user does not press the touchpad of the remote control device, the radius length of the first virtual arc surface is restored to the first length.

In a possible implementation, the remote control device receives a second operation. The second operation includes the first operation and the third operation on the touchpad of the remote control device. The first operation includes an operation of deflecting a pointing direction of the remote control device. The remote control device determines a first deflection angle of the pointing direction of the remote control device relative to a first reference line when the pointing direction of the remote control device is deflected. The first reference line is a connection line between a position of the remote control device and a central position of a screen device. The remote control device determines a first offset distance based on the first deflection angle and the first virtual arc surface. The remote control device is located inside an arc of the first virtual arc surface, and the screen device is located outside the arc of the first virtual arc surface. A central position of the first virtual arc surface is on the first reference line, a tangent at the central position of the first virtual arc surface is perpendicular to the first reference line, and the radius length of the first virtual arc surface is the second length. The remote control device determines, based on the central position of the screen device and the first offset distance, a cursor position that is of a cursor corresponding to the remote control device and that is on the screen device.

For ease of understanding, the following uses an example in which the third operation is pressing the touchpad of the remote control device for description.

In a process in which the user presses the touchpad of the remote control device, the radius length of the first virtual arc surface is the second length, and the user may deflect the remote control device, so that the pointing direction of the remote control device is deflected. Deflection of the pointing direction of the remote control device includes deflection in a horizontal direction and/or deflection in a vertical direction. The first deflection angle of the pointing direction of the remote control device relative to the first reference line includes a first horizontal deflection angle and/or a first vertical deflection angle.

When the radius length of the first virtual arc surface is the first length, the user may deflect the remote control device. In this case, a first horizontal offset distance corresponding to the first horizontal deflection angle and a first vertical offset distance corresponding to the first vertical deflection angle may be determined. The first horizontal offset distance is determined based on a product of the radius length (the first length) of the first virtual arc surface and the first horizontal deflection angle, and the first vertical offset distance is determined based on a product of the radius length (the first length) of the first virtual arc surface and the first vertical deflection angle.

When the radius length of the first virtual arc surface is the second length, the user may deflect the remote control device by a same angle. In this case, a fifth horizontal offset distance corresponding to the first horizontal deflection angle and a fifth vertical offset distance corresponding to the first vertical deflection angle may be determined. The fifth horizontal offset distance is determined based on a product of the radius length (the second length) of the first virtual arc surface and the first horizontal deflection angle, and the fifth vertical offset distance is determined based on a product of the radius length (the second length) of the first virtual arc surface and the first vertical deflection angle.

It can be learned from the foregoing process that because the second length is less than the first length, the fifth horizontal offset distance is less than or equal to the first horizontal offset distance, and the fifth vertical offset distance is less than or equal to the first vertical offset distance.

The following uses an example in which the screen device is a screen of a smart television for description.

For example, as shown in a top view in FIG. 34A and a left view in FIG. 34B, the position of the remote control device is in front of the central position of the screen of the smart television, the pointing direction of the remote control device is perpendicular to the screen of the smart television, and the cursor corresponding to the remote control device is displayed at a point A on the screen of the smart television. The point A is the central position of the screen of the smart television.

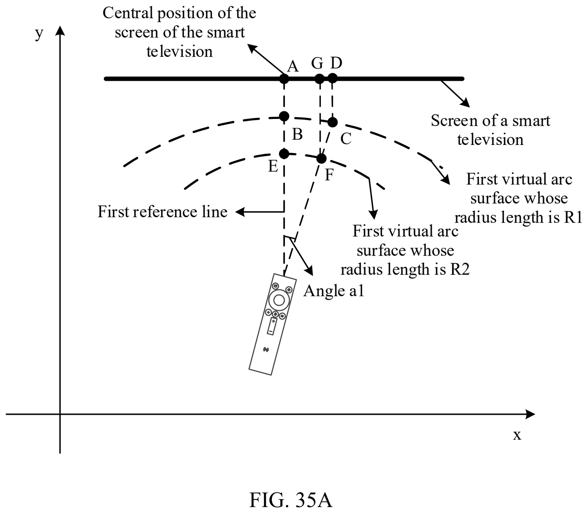

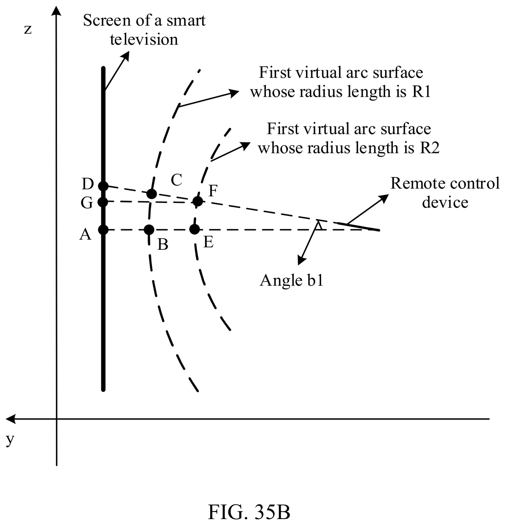

When the user does not press the touchpad of the remote control device, and the radius length of the virtual arc surface is R1, the user deflects the remote control device. The first horizontal deflection angle of the remote control device is a1, and the first vertical deflection angle of the remote control device is b1. As shown in a top view in FIG. 35A, a product of the radius length R1 of the first virtual arc surface and the first horizontal deflection angle a1 is a horizontal arc length between two points B and C. A product of the horizontal arc length between the two points B and C and a first horizontal adjustment ratio is used as the first horizontal offset distance. That is, a first coordinate value of the cursor position in an x-axis direction (namely, a coordinate value of a point D in the x-axis direction) may be determined based on the central position of the screen of the smart television (namely, a coordinate value of a point A in the x-axis direction) and the first horizontal offset distance. As shown in a left view in FIG. 35B, a product of the radius length R1 of the first virtual arc surface and the first vertical deflection angle b1 is a vertical arc length between the two points B and C. A product of the vertical arc length between the two points B and C and the first vertical adjustment ratio is used as the first vertical offset distance. That is, a second coordinate value of the cursor position in a z-axis direction (namely, a coordinate value of the point D in the z-axis direction) may be determined based on the central position of the screen of the smart television (namely, a coordinate value of the point A in the z-axis direction) and the first vertical offset distance. Finally, the first coordinate value and the second coordinate value form coordinates of the cursor position. The cursor position (namely, the point D) that is of the cursor corresponding to the remote control device and that is on the screen of the smart television is determined based on the coordinates of the cursor position, and the cursor is displayed at the coordinates of the cursor position.

When the user presses the touchpad of the remote control device, and the radius length of the virtual arc surface is R2, the user deflects the remote control device, where R2 is less than R1. The first horizontal deflection angle of the remote control device is a1, and the first vertical deflection angle of the remote control device is b1. As shown in a top view in FIG. 35A, a product of the radius length R2 of the first virtual arc surface and the first horizontal deflection angle a1 is a horizontal arc length between two points E and F. A product of the horizontal arc length between the two points E and F and a first horizontal adjustment ratio is used as the fifth horizontal offset distance. That is, a first coordinate value of the cursor position in an x-axis direction (namely, a coordinate value of a point G in the x-axis direction) may be determined based on the central position of the screen of the smart television (namely, a coordinate value of the point A in the x-axis direction) and the fifth horizontal offset distance. As shown in a left view in FIG. 35B, a product of the radius length R2 of the first virtual arc surface and the first vertical deflection angle b1 is a vertical arc length between the two points E and F. A product of the vertical arc length between the two points E and F and the first vertical adjustment ratio is used as the first vertical offset distance. That is, a second coordinate value of the cursor position in a z-axis direction (namely, a coordinate value of the point G in the z-axis direction) may be determined based on the central position of the screen of the smart television (namely, a coordinate value of the point A in the z-axis direction) and the first vertical offset distance. Finally, the first coordinate value and the second coordinate value form coordinates of the cursor position. The cursor position (namely, the point G) that is of the cursor corresponding to the remote control device and that is on the screen of the smart television is determined based on the coordinates of the cursor position, and the cursor is displayed at the coordinates of the cursor position.

In the foregoing embodiment, when the radius length of the first virtual arc surface is decreased, if the remote control device is deflected by a same angle, a movement speed of the cursor can be decreased, and accuracy of the determined cursor position can be improved.

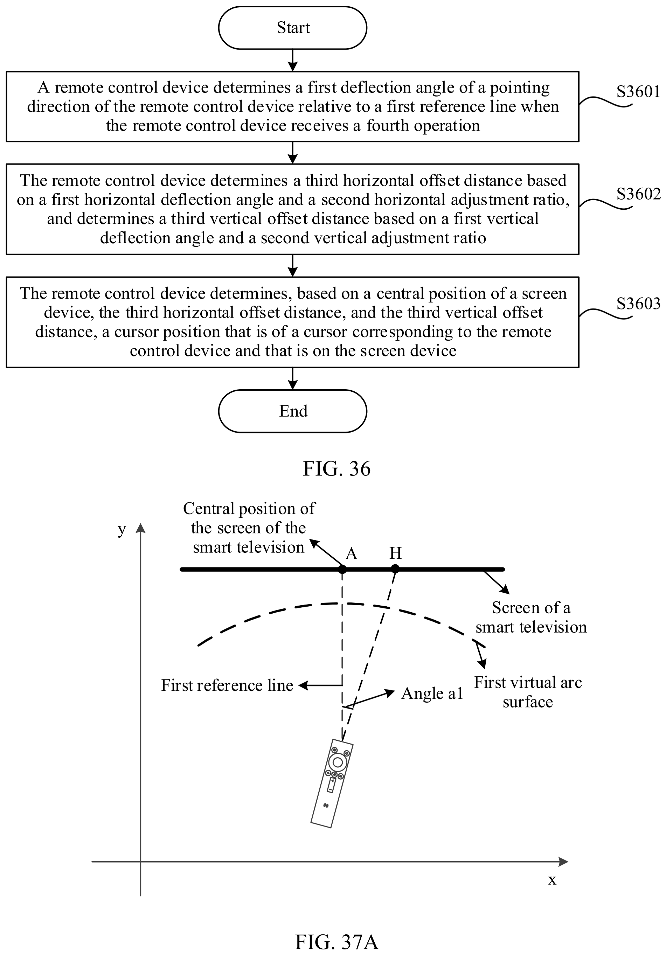

To improve accuracy of the determined cursor position, an embodiment of this application further provides a cursor position determining method. The method may include the following steps shown in FIG. 36.

S3601: A remote control device determines a first deflection angle of a pointing direction of the remote control device relative to a first reference line when the remote control device receives a fourth operation, where the fourth operation includes an operation of deflecting the pointing direction of the remote control device and a fifth operation on a touchpad of the remote control device, and the first reference line is a connection line between a position of the remote control device and a central position of a screen device.

In this embodiment of this application, the fifth operation may be understood as pressing the touchpad of the remote control device, or the like. This is not limited herein. For ease of understanding, the following uses an example in which the fifth operation is pressing the touchpad of the remote control device for description.

A method for determining the first deflection angle in the foregoing step is similar to the method for determining the first deflection angle in S501. Details are not described herein again.

When the touchpad of the remote control device is pressed, a radius length of a virtual arc surface does not change, that is, a radius length of a first virtual arc surface is a first length. When the touchpad of the remote control device is pressed, if the pointing direction of the remote control device is deflected, deflection of the pointing direction of the remote control device includes deflection in a horizontal direction and/or deflection in a vertical direction. The first deflection angle of the pointing direction of the remote control device relative to the first reference line includes a first horizontal deflection angle and/or a first vertical deflection angle.

S3602: The remote control device determines a third horizontal offset distance based on the first horizontal deflection angle and a second horizontal adjustment ratio, and determines a third vertical offset distance based on the first vertical deflection angle and a second vertical adjustment ratio.

In this embodiment of this application, a product of the first horizontal deflection angle and the second horizontal adjustment ratio is used as the third horizontal offset distance, and a product of the first vertical deflection angle and the second vertical adjustment ratio is used as the third vertical offset distance.

For ease of understanding, it may be understood that a product of the first horizontal deflection angle, the second horizontal adjustment ratio, and the radius length 1 is used as the third horizontal offset distance. Similarly, it may be understood that a product of the first vertical deflection angle, the second vertical adjustment ratio, and the radius length 1 is used as the third vertical offset distance.

In this embodiment of this application, both the first horizontal deflection angle and the first vertical deflection angle determined in the foregoing implementation are expressed in degrees. To facilitate subsequent calculation, the first horizontal deflection angle and the first vertical deflection angle may be changed, by using a correspondence between degrees and radians, to be expressed in radians. The correspondence between degrees and radians is: 1 degree=$\pi$/180 radian, where / is a semicolon.

It should be understood that the second horizontal adjustment ratio and the second vertical adjustment ratio are preset values, and the second horizontal adjustment ratio and the second vertical adjustment ratio may be the same or may be different. The second horizontal adjustment ratio and the second vertical adjustment ratio may be set to decimals between 0 and 1, or may be set to numbers greater than 1.

It can be learned from the foregoing process that both the third horizontal offset distance and the third vertical offset distance are irrelevant to the radius length of the first virtual arc surface.

S3603: The remote control device determines, based on the central position of the screen device, the third horizontal offset distance, and the third vertical offset distance, a cursor position that is of a cursor corresponding to the remote control device and that is on the screen device.

In this embodiment of this application, after the third horizontal offset distance and the third vertical offset distance are determined, the cursor position may be determined in the following method: first, determining a third coordinate value of the cursor position in an x-axis direction based on the central position of the screen device and the third horizontal offset distance, and then, determining a fourth coordinate value of the cursor position in a z-axis direction based on the central position of the screen device and the third vertical offset distance. The third coordinate value and the fourth coordinate value form coordinates of the cursor position. The cursor position that is of the cursor corresponding to the remote control device and that is on the screen device may be determined based on the coordinates of the cursor position, and the cursor is displayed at the coordinates of the cursor position.

The following uses an example in which the screen device is a screen of a smart television for description.

For example, as shown in a top view in FIG. 34A and a left view in FIG. 34B, the position of the remote control device is in front of the central position of the screen of the smart television, the pointing direction of the remote control device is perpendicular to the screen of the smart television, and the cursor corresponding to the remote control device is displayed at a point A on the screen of the smart television. The point A is the central position of the screen of the smart television.

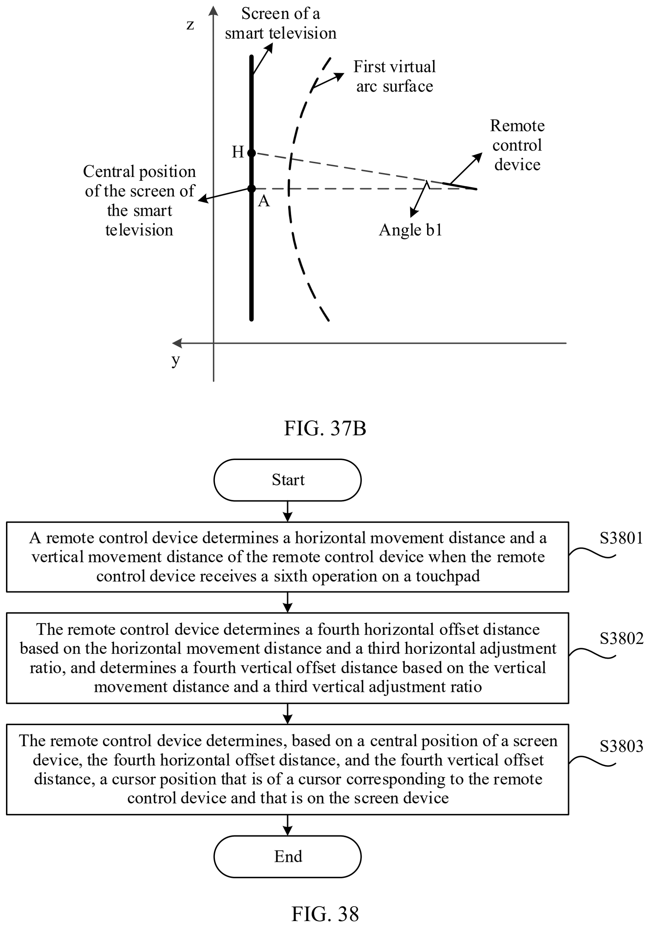

When the user presses the touchpad of the remote control device, the user deflects the remote control device. The first horizontal deflection angle of the remote control device is a1, and the first vertical deflection angle of the remote control device is b1. As shown in a top view in FIG. 37A, a product of the first horizontal deflection angle a1 and the second horizontal adjustment ratio is used as the third horizontal offset distance. That is, a third coordinate value of the cursor position in the x-axis direction (namely, a coordinate value of a point H in the x-axis direction) may be determined based on the central position of the screen of the smart television (namely, a coordinate value of a point A in the x-axis direction) and the third horizontal offset distance. As shown in a left view in FIG. 37B, a product of the first vertical deflection angle b1 and the second vertical adjustment ratio is used as the third vertical offset distance. That is, a fourth coordinate value of the cursor position in the z-axis direction (namely, a coordinate value of the point H in the z-axis direction) may be determined based on the central position of the screen of the smart television (namely, a coordinate value of the point A in the z-axis direction) and the third vertical offset distance. Finally, the third coordinate value and the fourth coordinate value form coordinates of the cursor position. The cursor position (namely, the point H) that is of the cursor corresponding to the remote control device and that is on the screen of the smart television is determined based on the coordinates of the cursor position, and the cursor is displayed at the coordinates of the cursor position.

In the foregoing embodiment, the cursor position changes with the first horizontal deflection angle and the first vertical deflection angle, and is not affected by the radius length of the first virtual arc surface. Therefore, a convenient cursor position determining method is provided.

To improve accuracy of the cursor position, an embodiment of this application further provides a cursor position determining method. The method may include the following steps shown in FIG. 38.

S3801: A remote control device determines a horizontal movement distance and a vertical movement distance of the remote control device when the remote control device receives a sixth operation on a touchpad, where the sixth operation includes an operation of moving the remote control device and a seventh operation on the touchpad of the remote control device.

In this embodiment of this application, the seventh operation may be understood as pressing the touchpad of the remote control device, or the like. This is not limited herein. For ease of understanding, the following uses an example in which the seventh operation is pressing the touchpad of the remote control device for description.

When the touchpad of the remote control device is pressed, a radius length of a virtual arc surface does not change, that is, a radius length of a first virtual arc surface is a first length.

S3802: The remote control device determines a fourth horizontal offset distance based on the horizontal movement distance and a third horizontal adjustment ratio, and determines a fourth vertical offset distance based on the vertical movement distance and a third vertical adjustment ratio.

In this embodiment of this application, a product of the horizontal movement distance and the third horizontal adjustment ratio is used as the fourth horizontal offset distance, and a product of the vertical movement distance and the third vertical adjustment ratio is used as the fourth vertical offset distance.

It should be understood that the third horizontal adjustment ratio and the third vertical adjustment ratio are preset values, and the third horizontal adjustment ratio and the third vertical adjustment ratio may be the same or may be different. The third horizontal adjustment ratio and the third vertical adjustment ratio may be set to decimals between 0 and 1, or may be set to numbers greater than 1.

It can be learned from the foregoing process that both the fourth horizontal offset distance and the fourth vertical offset distance are irrelevant to the radius length of the first virtual arc surface.

S3803: The remote control device determines, based on a central position of a screen device, the fourth horizontal offset distance, and the fourth vertical offset distance, a cursor position that is of a cursor corresponding to the remote control device and that is on the screen device.

In this embodiment of this application, after the fourth horizontal offset distance and the fourth vertical offset distance are determined, the cursor position may be determined in the following method: first, determining a fifth coordinate value of the cursor position in an x-axis direction based on the central position of the screen device and the fourth horizontal offset distance, and then, determining a sixth coordinate value of the cursor position in a z-axis direction based on the central position of the screen device and the fourth vertical offset distance. The fifth coordinate value and the sixth coordinate value form coordinates of the cursor position. The cursor position that is of the cursor corresponding to the remote control device and that is on the screen device may be determined based on the coordinates of the cursor position, and the cursor is displayed at the coordinates of the cursor position.

The following uses an example in which the screen device is a screen of a smart television for description.

For example, as shown in a top view in FIG. 34A and a left view in FIG. 34B, the position of the remote control device is in front of a central position of a screen, a pointing direction of the remote control device is perpendicular to the screen of a smart television, and the cursor corresponding to the remote control device is displayed at a point A on the screen of the smart television. The point A is the central position of the screen of the smart television.

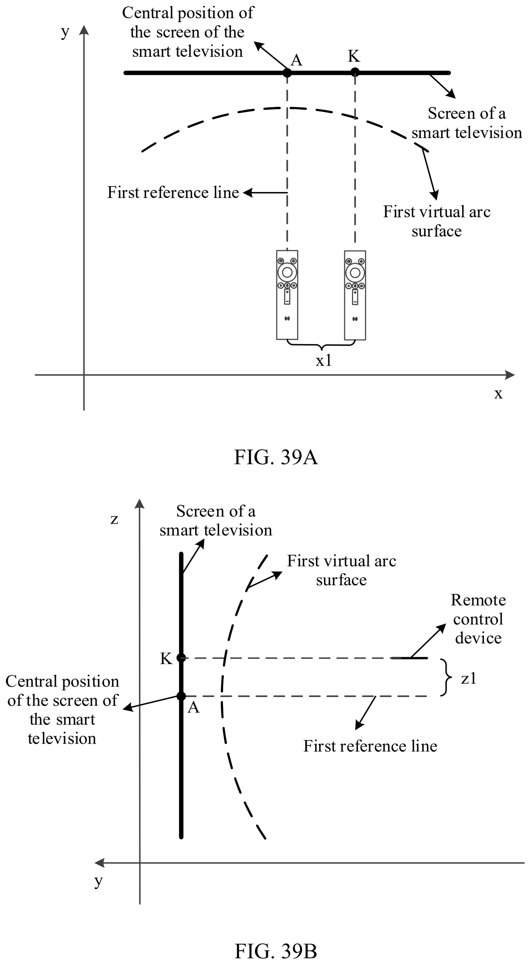

When a user presses the touchpad of the remote control device, the user moves the remote control device. The horizontal movement distance of the remote control device is x1, and the vertical movement distance of the remote control device is z1. As shown in a top view in FIG. 39A, a product of the horizontal movement distance x1 and the second horizontal adjustment ratio is used as the fourth horizontal offset distance. That is, a fifth coordinate value of the cursor position in the x-axis direction (namely, a coordinate value of a point K in the x-axis direction) may be determined based on the central position of the screen of the smart television (namely, a coordinate value of a point A in the x-axis direction) and the fourth horizontal offset distance. As shown in a left view in FIG. 39B, a product of the vertical movement distance z1 and the second vertical adjustment ratio is used as the fourth vertical offset distance. That is, a sixth coordinate value of the cursor position in the z-axis direction (namely, a coordinate value of the point K in the z-axis direction) may be determined based on the central position of the screen of the smart television (namely, a coordinate value of the point A in the z-axis direction) and the fourth vertical offset distance. Finally, the fifth coordinate value and the sixth coordinate value form coordinates of the cursor position. The cursor position (namely, the point K) that is of the cursor corresponding to the remote control device and that is on the screen of the smart television is determined based on the coordinates of the cursor position, and the cursor is displayed at the coordinates of the cursor position.

In the foregoing embodiment, the cursor position changes with the horizontal movement distance and the vertical movement distance, and is not affected by the radius length of the first virtual arc surface. Therefore, a convenient cursor position determining method is provided.

In the foregoing embodiments provided in this application, the methods provided in embodiments of this application are described from a perspective of the remote control device as an execution body. To implement the functions in the method provided in embodiments of this application, the remote control device may include a hardware structure and/or a software module, and the functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

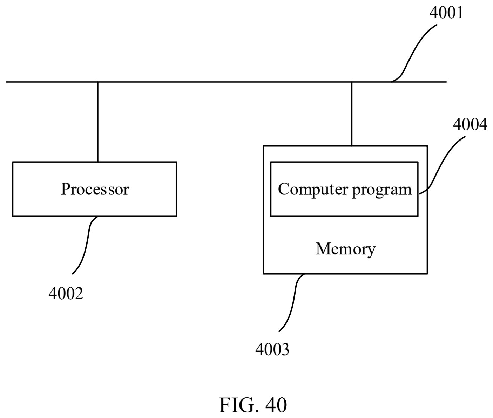

For example, when hardware is used for implementation, for hardware implementation of the remote control device, refer to FIG. 40 and related descriptions thereof.

With reference to FIG. 40, the remote control device may include one or more processors 4002, a memory 4003, one or more applications (not shown), and one or more computer programs 4004. The foregoing components may be connected through one or more communication buses 4001. The one or more computer programs 4004 are stored in the memory 4003 and are configured to be executed by the one or more processors 4002. The one or more computer programs 4004 include instructions, and the instructions may be used to perform the method in any one of the foregoing embodiments.

An embodiment of this application further provides a computer storage medium. The computer storage medium stores computer instructions. When the computer instructions are run on a remote control device, the remote control device is enabled to perform the foregoing related method steps, to implement the cursor position determining methods for the remote control device in the foregoing embodiments.

An embodiment of this application further provides a computer program product. When the computer program product runs on a computer, the computer is enabled to perform the foregoing related method steps, to implement the cursor position determining methods for the remote control device in the foregoing embodiments.

The remote control device, the computer storage medium, the computer program product, or the chip provided in embodiments of this application is configured to perform a corresponding method provided above. Therefore, for beneficial effects that can be achieved, refer to the beneficial effects in the corresponding methods provided above.

Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, module and unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A cursor position determining method, applied to a remote control device, wherein the method comprises:

   determining a first deflection angle of a pointing direction of the remote control device relative to a first reference line when the pointing direction of the remote control device is deflected, wherein the first reference line is a connection line between a position of the remote control device and a central position of a screen device;
   determining a first offset distance based on the first deflection angle and a first virtual arc surface, wherein the remote control device is located inside an arc of the first virtual arc surface, the screen device is located outside the arc of the first virtual arc surface, a central position of the first virtual arc surface is on the first reference line, and a tangent at the central position of the first virtual arc surface is perpendicular to the first reference line; and
   determining, based on the central position of the screen device and the first offset distance, a cursor position that is of a cursor corresponding to the remote control device and that is on the screen device.

2. The method according to claim 1, wherein the first deflection angle comprises a first horizontal deflection angle and a first vertical deflection angle; and
   determining the first deflection angle of the pointing direction of the remote control device relative to the first reference line comprises:

   using an included angle between the pointing direction of the remote control device and the first reference plane as the first horizontal deflection angle, wherein the first reference plane is a plane that is perpendicular to a horizontal plane and that comprises the first reference line; and
   using an included angle between the pointing direction of the remote control device and the second reference plane as the first vertical deflection angle, wherein the second reference plane is a plane that is parallel to the horizontal plane and that comprises the first reference line.

3. The method according to claim 2, wherein the first offset distance comprises a first horizontal offset distance and a first vertical offset distance; and
determining the first offset distance based on the first deflection angle and the first virtual arc surface comprises:

using a product of a radius length of the first virtual arc surface and the first horizontal deflection angle as the first horizontal offset distance; and
using a product of the radius length of the first virtual arc surface and the first vertical deflection angle as the first vertical offset distance.

4. The method according to claim 2, wherein the first offset distance comprises a first horizontal offset distance and a first vertical offset distance; and
determining the first offset distance based on the first deflection angle and the first virtual arc surface comprises:

using a product of a radius length of the first virtual arc surface and the first horizontal deflection angle as the second horizontal offset distance;
using a product of a first horizontal adjustment ratio and the second horizontal offset distance as the first horizontal offset distance;
using a product of the radius length of the first virtual arc surface and the first vertical deflection angle as the second vertical offset distance; and
using a product of a first vertical adjustment ratio and the second vertical offset distance as the first vertical offset distance.

5. The method according to claim 3 or 4, wherein determining, based on the central position of the screen device and the first offset distance, the cursor position that is of the cursor corresponding to the remote control device and that is on the screen device comprises:

determining a first coordinate value based on the central position of the screen device and the first horizontal offset distance;
determining a second coordinate value based on the central position of the screen device and the first vertical offset distance; and
forming coordinates of the cursor position by using the first coordinate value and the second coordinate value, and determining, based on the coordinates of the cursor position, the cursor position that is of the cursor corresponding to the remote control device and that is on the screen device.

6. The method according to any one of claims 1 to 5, wherein before determining the first deflection angle of the pointing direction of the remote control device relative to the first reference line when the pointing direction of the remote control device is deflected, the method further comprises:

receiving a first operation, wherein the first operation comprises an operation of deflecting the pointing direction of the remote control device, and the radius length of the first virtual arc surface is a first length; or
receiving a second operation, wherein the second operation comprises the first operation and a third operation on a touchpad of the remote control device, the radius length of the first virtual arc surface is a second length, and the second length is less than the first length.

7. The method according to any one of claims 1 to 5, wherein the method further comprises:

determining the first deflection angle of the pointing direction of the remote control device relative to the first reference line when the remote control device receives a fourth operation, wherein the fourth operation comprises an operation of deflecting the pointing direction of the remote control device and a fifth operation on a touchpad of the remote control device, and the first reference line is the connection line between the position of the remote control device and the central position of the screen device;
determining a third horizontal offset distance based on the first horizontal deflection angle and a second horizontal adjustment ratio, and determining a third vertical offset distance based on the first vertical deflection angle and a second vertical adjustment ratio; and
determining, based on the central position of the screen device, the third horizontal offset distance, and the third vertical offset distance, the cursor position that is of the cursor corresponding to the remote control device and that is on the screen device.

8. The method according to any one of claims 1 to 5, wherein the method further comprises:

determining a horizontal movement distance and a vertical movement distance of the remote control device when the remote control device receives a sixth operation on a touchpad, wherein the sixth operation comprises an operation of moving the remote control device and a seventh operation on the touchpad of the remote control device;

determining a fourth horizontal offset distance based on the horizontal movement distance and a third horizontal adjustment ratio, and determining a fourth vertical offset distance based on the vertical movement distance and a third vertical adjustment ratio; and

determining, based on the central position of the screen device, the fourth horizontal offset distance, and the fourth vertical offset distance, the cursor position that is of the cursor corresponding to the remote control device and that is on the screen device.

9. A remote control device, comprising a processor and a memory, wherein
the processor is configured to execute a computer program or instructions stored in the memory, to enable the remote control device to implement the method according to any one of claims 1 to 8.

10. A computer-readable storage medium, storing a computer program or instructions, wherein when the computer program or the instructions are run on a computer, the computer-readable storage medium is enabled to implement the method according to any one of claims 1 to 8.

100

FIG. 1A

200

Head

Signal indication
apparatus

100

Tail

FIG. 1B

Remote control device 100

Antenna 1

Antenna 2

| Mobile communication module<br>2G/3G/4G/5G<br>[140] | Wireless communication module<br>BT/WLAN/GNSS/NFC/FM<br>[150] |

Button [170]

Indicator [171]

Processor
[110]

Sensor module [160]

Pressure sensor
[160A]

Gyroscope sensor
[160B]

Barometric
pressure sensor
[160C]

Magnetic sensor
[160D]

Acceleration
sensor [160E]

Distance sensor
[160F]

Touch sensor
[160K]

USB interface
[120]

Charging
input

Charging
management
module [130]

Power
management
module [131]

Battery [132]

FIG. 1C

| Application layer | WLAN | Bluetooth | ... |

| Application framework layer | Window manager | Content provider | ... |

| System library | Surface manager | ... | Android runtime |

| Kernel layer | Display driver | Sensor driver | ... |

FIG. 1D

Top-view direction

Cursor

Smart television

Left-view direction

Screen of the smart television

FIG. 2

L2

L1

Screen of a smart television

Angle a

FIG. 3A

L4

L3

Screen of
a smart
television

Angle a

FIG. 3B

L2

L1

Screen of
a smart
television

Angle a

FIG. 4A

L5

Angle b

L1

Screen of
a smart
television

Angle b

Angle a

FIG. 4B

Start

A remote control device determines a first deflection angle of a pointing
direction of the remote control device relative to a first reference line when the
pointing direction of the remote control device is deflected

S501

The remote control device determines a first offset distance based on the first
deflection angle and a first virtual arc surface, and determines, based on a
central position of a screen device and the first offset distance, a cursor position
that is of a cursor corresponding to the remote control device and that is on the
screen device

S502

End

FIG. 5

FIG. 6A

FIG. 6B

Position 1

Screen of a
smart television

FIG. 7A

Screen of a
smart television

Remote
control
device

Position 1

FIG. 7B

FIG. 7C

FIG. 7D

FIG. 7E

FIG. 7F

FIG. 7G

FIG. 7H

FIG. 8A

FIG. 8B

FIG. 8C

FIG. 8D

FIG. 8E

FIG. 8F

FIG. 8G

FIG. 8H

Central position
of a front end of a
remote control
device

FIG. 9

Central position
of a remote
control device

FIG. 10

Central position of a screen of
a smart television

First
reference line

FIG. 11

Central position of a screen of
a smart television

First
reference
line

Perpendicular
bisector of the
screen of the
smart television

FIG. 12

Pointing
direction

Long edge
line

FIG. 13A

Pointing
direction

Long edge
line

FIG. 13B

Central position of a screen
of a smart television

First
reference
line

FIG. 14A

Central position of a screen
of a smart television

First
reference
line

First
reference
line

FIG. 14B

Central position of a screen
of a smart television

First
reference
line

First
reference
line

FIG. 14C

Top-view
direction

Central position of a screen
of a smart television

Left-view
direction

First
reference
line

Pointing direction
of a remote
control device

## FIG. 15A

Central position of
the screen of the
smart television

y

Screen of a
smart television

Pointing direction
of a remote
control device

First
reference
line

x

## FIG. 15B

Screen of a
smart television

z

Remote
control
device

Pointing direction
of the remote
control device

Central position
of the screen of
the smart
television

First reference line

y

FIG. 15C

Top-view
direction

Central position of
a screen of a smart
television

Left-view
direction

First
reference
line

Pointing
direction of a
remote control
device

FIG. 16A

Central position of
the screen of the
smart television

y

Screen of a
smart television

Pointing direction
of a remote control
device

First
reference line

x

FIG. 16B

Screen of a smart
television

z

Pointing direction
of the remote
control device

Remote
control
device

Central position
of the screen of
the smart
television

First
reference line

y

FIG. 16C

Top-view direction

Central position of a screen of a smart television

Left-view direction

First reference line

Pointing direction of a remote control device

FIG. 17A

Central position of the screen of the smart television

y

First reference line

Screen of a smart television

Pointing direction of a remote control device

x

FIG. 17B

FIG. 17C

FIG. 18A

Central position of
the screen of the
smart television

y

Screen of a
smart television

First
reference
line

Pointing direction of a
remote control device

Angle a1

x

FIG. 18B

Screen of a
smart
television

z

Pointing
direction of the
remote control
device

Central position
of the screen of
the smart
television

Remote
control
device

First
reference
line

Angle b1

y

FIG. 18C

Top-view direction

Left-view direction

Central position of a screen of a smart television

Second reference plane

First reference line

Pointing direction of a remote control device

First reference plane

FIG. 19A

FIG. 19B

FIG. 19C

```
                        ┌─────────┐
                        │  Start  │
                        └─────────┘
                             │
                             ▼
┌──────────────────────────────────────────────────────────┐      S2001
│ A remote control device determines a second reference     │
│ line based on a position of the remote control device     │
│ and a position of a screen device                         │
└──────────────────────────────────────────────────────────┘
                             │
                             ▼
┌──────────────────────────────────────────────────────────┐      S2002
│ The remote control device determines a second deflection  │
│ angle based on a first reference line and the second      │
│ reference line                                            │
└──────────────────────────────────────────────────────────┘
                             │
                             ▼
┌──────────────────────────────────────────────────────────┐      S2003
│ The remote control device determines a third deflection   │
│ angle based on the second reference line and a pointing    │
│ direction of the remote control device                    │
└──────────────────────────────────────────────────────────┘
                             │
                             ▼
┌──────────────────────────────────────────────────────────┐      S2004
│ The remote control device determines a first deflection   │
│ angle based on the second deflection angle and the third   │
│ deflection angle                                          │
└──────────────────────────────────────────────────────────┘
                             │
                             ▼
                        ┌─────────┐
                        │   End   │
                        └─────────┘
```

FIG. 20

Central position of a screen of
a smart television

First
reference
line

Second
reference
line

FIG. 21A

FIG. 21B

FIG. 22A

Central position of a screen
of a smart television

Second
reference
line

Second
reference
line

FIG. 22B

Central position of a screen
of a smart television

Second
reference
line

Second
reference
line

FIG. 22C

EP 4 692 997 A1

Top-view direction

Central position of a screen of a smart television

Left-view direction

Second reference line

First reference line

FIG. 23A

Central position of the screen of the smart television

y

Second reference line

First reference line

Screen of a smart television

d1

x

FIG. 23B

59

FIG. 23C

FIG. 24A

Central position of
the screen of the
smart television

y

Second
reference
line

First
reference
line

d1

Screen of a
smart
television

x

FIG. 24B

z

Screen of a
smart television

Central
position of
the screen
of the smart
television

d1

Remote
control
device

First
reference
line

Second
reference
line

y

FIG. 24C

FIG. 25A

FIG. 25B

FIG. 25C

Top-view direction

Central position of a screen of a smart television

Left-view direction

Second reference line

First reference line

Pointing direction of a remote control device

Sixth reference plane

Fifth reference plane

## FIG. 26A

Central position of the screen of the smart television

$y$

Second reference line

First reference line

Pointing direction of a remote control device

Screen of a smart television

$d1$

$x$

## FIG. 26B

z

Screen of a
smart television

Remote
control
device

d1

Central
position of the
screen of the
smart
television

First
reference line

Second reference line

Pointing direction
of the remote
control device

y

FIG. 26C

Top-view direction

Central position of a screen of a smart television

Left-view direction

Second reference line

Sixth reference plane

First reference line

Pointing direction of a remote control device

Fifth reference plane

FIG. 27A

Central position of the screen of the smart television

y

Second reference line

Screen of a smart television

d1

First reference line

Pointing direction of a remote control device

Angle a2

x

FIG. 27B

FIG. 27C

FIG. 28A

FIG. 28B

z

Screen of a smart
television

Pointing
direction of the
remote control
device

Second
reference
line

Remote control
device

Central
position of
the screen
of the smart
television

d3

d1

Angle b2

First
reference
line

y

FIG. 28C

Top-view
direction

Central position
of a screen of a
smart television

Fifth reference plane

Left-view
direction

Pointing
direction of a
remote
control device

Sixth
reference
plane

First reference line

Second
reference line

FIG. 29A

Central position of
the screen of the
smart television

y

d2

Screen of a smart television

Pointing direction of a
remote control device

d1

First
reference
line

Second reference line

Angle a2

x

FIG. 29B

z

Screen of a smart
television

Second
reference line

Remote
control device

d1

Central
position of the
screen of the
smart
television

d3

Angle b2

First reference
line

Pointing direction
of the remote
control device

y

FIG. 29C

Screen of a
smart
television

y

Outside the arc

Inside an arc

First virtual
arc surface

x

## FIG. 30

Start

A remote control device determines, on a second reference line, a first reference position that is at a first preset distance from a position of the remote control device — S3101

The remote control device determines a second virtual arc surface based on the first reference position — S3102

The remote control device determines, on a first reference line, a second reference position that is at the first preset distance from the position of the remote control device — S3103

Adjust the second virtual arc surface based on the first reference position and the second reference position, to obtain a first virtual arc surface — S3104

End

## FIG. 31

Central position of a screen of
a smart television

Second reference
position

First reference
position

Second virtual
arc surface

Central position
of the second
virtual arc surface

Central position
of the first
virtual arc
surface

First reference line

First virtual arc
surface

Second reference line

First preset
distance

FIG. 32

Central position of a screen
of a smart television

First reference
position

Central position
of the second
virtual arc
surface

Second
reference line

Second virtual
arc surface

First preset
distance

FIG. 33A

Central position of a screen
of a smart television

Second reference
position

First preset
distance

First reference line

First reference position

Second
reference line

First preset
distance

FIG. 33B

Central position
of a screen of a
smart television

Second reference
position

Central position
of the first virtual
arc surface

First virtual
arc surface

First reference
line

First reference
position

Second
reference line

FIG. 33C

Central position of
the screen of the
smart television

A

Screen of a smart
television

B

First reference
line

First virtual arc
surface

y

x

FIG. 34A

z

Screen of a smart
television

First virtual
arc surface

Remote
control
device

A  B

y

FIG. 34B

FIG. 34C

FIG. 34D

FIG. 35A

FIG. 35B

```
          ┌─────────────┐
          │    Start    │
          └─────────────┘
                 │
                 ▼
┌──────────────────────────────────────────────────────────┐
│  A remote control device determines a first deflection    │── S3601
│  angle of a pointing direction of the remote control      │
│  device relative to a first reference line when the       │
│  remote control device receives a fourth operation        │
└──────────────────────────────────────────────────────────┘
                 │
                 ▼
┌──────────────────────────────────────────────────────────┐
│  The remote control device determines a third horizontal  │── S3602
│  offset distance based on a first horizontal deflection    │
│  angle and a second horizontal adjustment ratio, and      │
│  determines a third vertical offset distance based on a    │
│  first vertical deflection angle and a second vertical     │
│  adjustment ratio                                          │
└──────────────────────────────────────────────────────────┘
                 │
                 ▼
┌──────────────────────────────────────────────────────────┐
│  The remote control device determines, based on a         │── S3603
│  central position of a screen device, the third horizontal│
│  offset distance, and the third vertical offset distance,  │
│  a cursor position that is of a cursor corresponding to    │
│  the remote control device and that is on the screen device│
└──────────────────────────────────────────────────────────┘
                 │
                 ▼
          ┌─────────────┐
          │    End      │
          └─────────────┘
```

FIG. 36

FIG. 37A

**FIG. 37B**

Start

A remote control device determines a horizontal movement distance and a vertical movement distance of the remote control device when the remote control device receives a sixth operation on a touchpad — S3801

The remote control device determines a fourth horizontal offset distance based on the horizontal movement distance and a third horizontal adjustment ratio, and determines a fourth vertical offset distance based on the vertical movement distance and a third vertical adjustment ratio — S3802

The remote control device determines, based on a central position of a screen device, the fourth horizontal offset distance, and the fourth vertical offset distance, a cursor position that is of a cursor corresponding to the remote control device and that is on the screen device — S3803

End

**FIG. 38**

FIG. 39A

FIG. 39B

4001

4004

Processor

Computer program

Memory

4002

4003

FIG. 40

## INTERNATIONAL SEARCH REPORT

| International application No. |
| --- |
| **PCT/CN2024/097873** |

### A. CLASSIFICATION OF SUBJECT MATTER

G06F3/0346(2013.01)i; H04N 21/422(2011.01)i; G06F3/01(2006.01)i

According to International Patent Classification (IPC) or to both national classification and IPC

### B. FIELDS SEARCHED

Minimum documentation searched (classification system followed by classification symbols)

  IPC: H04N; G06F

Documentation searched other than minimum documentation to the extent that such documents are included in the fields searched

Electronic data base consulted during the international search (name of data base and, where practicable, search terms used)

  CNTXT, ENTXTC, ENTXT, DWPI, CNKI: 定位, 光标, 夹角, 角度, 距离, 空, 屏幕, 确定, 鼠, 投影, 位置, 显示屏, 电视, 遥控, 坐标, 位移, 弧, LCD, cursor, display, position, coordinate, angle, distance, air mouse, arc

### C. DOCUMENTS CONSIDERED TO BE RELEVANT

| Category* | Citation of document, with indication, where appropriate, of the relevant passages | Relevant to claim No. |
| --- | --- | --- |
| A | US 2019012002 A1 (ZTE CORP.) 10 January 2019 (2019-01-10)<br>  description, paragraphs 59-62 | 1-10 |
| A | CN 103294177 A (RICOH CO., LTD.) 11 September 2013 (2013-09-11)<br>  entire document | 1-10 |
| A | CN 101764964 A (KONKA GROUP CO., LTD.) 30 June 2010 (2010-06-30)<br>  entire document | 1-10 |
| A | CN 103902061 A (HUAWEI TECHNOLOGIES CO., LTD.) 02 July 2014 (2014-07-02)<br>  entire document | 1-10 |
| A | WO 2018045688 A1 (GUANGZHOU SHIRUI ELECTRONICS CO., LTD.) 15 March 2018<br>(2018-03-15)<br>  entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 August 2024** | **21 August 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
| Information on patent family members | PCT/CN2024/097873 |

| Patent document cited in search report | | | Publication date (day/month/year) | Patent family member(s) | | | Publication date (day/month/year) |
|---|---|---|---|---|---|---|---|
| US | 2019012002 | A1 | 10 January 2019 | WO | 2016131292 | A1 | 25 August 2016 |
|    |            |    |                 | EP | 3330843    | A1 | 06 June 2018 |
| CN | 103294177  | A  | 11 September 2013 | | None | | |
| CN | 101764964  | A  | 30 June 2010 | | None | | |
| CN | 103902061  | A  | 02 July 2014 | | None | | |
| WO | 2018045688 | A1 | 15 March 2018 | CN | 106406572 | A | 15 February 2017 |

Form PCT/ISA/210 (patent family annex) (July 2022)

**REFERENCES CITED IN THE DESCRIPTION**

**Patent documents cited in the description**

- CN 202310909379